# EUROPEAN PATENT SPECIFICATION

(11) **EP 2 642 770 B1**
(45) Date of publication and mention of the grant of the patent: **14.05.2014**
(21) Application number: 13173225.7
(22) Date of filing: 18.07.2011
(51) Int. Cl.: H04R 29/00, H04R 3/00, H04R 5/04, H04M 1/60

(54) **Audio reproduction device and method of controlling thereof**
Audiowiedergabegerät und dessen Steuerungsverfahren
Appareil de reproduction audio et son procédé de contrôle

(30) Priority: 18.07.2010 US 838465; 18.07.2010 US 838464; 28.09.2010 US 387282 P
(43) Date of publication of application: 25.09.2013
(62) Divisional of application: 11754560.8
(73) Proprietor: Bose Corporation, Framingham, Massachusetts 01701 (US)
(72) Inventor: Yamkovoy, Paul G., Framingham, MA Massachusetts 01701 (US); Iyengar, Vasu, Framingham, MA Massachusetts 01701 (US); Pyatt, Richard L., Framingham, MA Massachusetts 01701 (US); Isabelle, Steven H., Framingham, MA Massachusetts 01701 (US); D'Agostino, Michael, Framingham, MA Massachusetts 01701 (US)
(74) Representative: Attali, Pascal

(56) References cited:
- GB-A- 2 123 193
- US-A1- 2002 097 883

## Description

### TECHNICAL FIELD

This disclosure relates to devices incorporating electro-acoustic transducers (e.g., acoustic drivers), and devices that are able to be coupled to other devices through audio signal conductors to exchange analog signals and/or digital data representing sounds.

### BACKGROUND

Electro-acoustic transducers and devices that incorporate them are becoming ever more widely used at an ever increasing rate. Technological advances have increased the amount of voice, video, music and other audio-visual material that can be stored within both portable and stationary devices; have increased the fidelity with which voice and video are able to be conveyed between persons in two-way communications; have increased the effectiveness with which active noise reduction (ANR) capabilities can be provided by a portable device; and have increased the flexibility that can be provided to end users to manipulate audio-visual material as it is played. As a result, not only has the quantity of devices incorporating electro-acoustic transducers dramatically increased, but so has the expectations of end-users regarding the quality of those devices.

By way of example, not just the quantity of personal digital audio players has increased, but also end user expectations of being able to hear the audio played by these devices with a fuller range of frequencies and greater clarity, even when listening with what might otherwise be viewed as a "simple" pair of headphones. By way of another example, not just the quantity of home theatre systems capable of providing a sought-after "movie like" experience has increased, but also user expectations of the quality of the audible illusion of "being there" in the scenery displayed on a screen as provided by an ever increasing quantity and types of acoustic drivers positioned around an end user's listening space. By way of yet another example, not just the quantity of personal ANR headsets has increased, but also user expectations of the completeness of the noise reduction effect to enable them to "shut out" (i.e., attenuate) unwanted sounds in their environment.

With this fast developing situation, overcoming inevitable variances in the characteristics of electro-acoustic transducers, from one to another of any given manufacturing run and from sought-after ideal characteristics, is becoming ever more important. A longstanding practice to accommodate such variances has been testing a specific electro-acoustic transducer to discern its characteristics, and then tuning a gain control component within a device to compensate for how those characteristics differ from sought-after ideal characteristics. Taking this step in the manufacture of such a device may successfully bring the resulting behavior of that electro-acoustic transducer closer to a sought-after ideal, but the effectiveness of this step can later be entirely undermined where that electro-acoustic transducer or that previously tuned gain control component is replaced such that there ceases to be such a match between an electro-acoustic transducer and a gain control component.

Correcting this later introduction of such a mismatch between an electro-acoustic transducer and the tuning of a gain control component usually involves bringing the device to a location at which appropriately trained personnel with access to appropriate equipment are able to perform the same type of testing of the electro-acoustic transducer and tuning of the gain control component that was originally done as part of the manufacture of the device to create a new such match. Alternatively, where it is the electro-acoustic transducer that is being replaced, correcting such a later occurring mismatch could involve testing a multitude of candidate replacement electro-acoustic transducers in the hope of finding one having characteristics close enough to the one being replaced that another tuning of a gain control component is rendered unnecessary.

GB 2123193 A and US 2002/0097883 A1 disclose methods for controlling the reproduction of an analog audio signal sent from an apparatus to a loudspeaker connected to said apparatus.

### SUMMARY

In one aspect, an apparatus includes an acoustic driver; two audio signal conductors to enable coupling of the apparatus to a device; an audio circuit structured to manipulate an analog audio signal representing a sound provided by the device on the two audio signal conductors to derive a derived sound from the sound, and coupled to the acoustic driver to convey a derived analog audio signal representing the derived sound to the acoustic driver; and a separator circuit coupled to the two audio signal conductors and to the audio circuit. The separator circuit is structured to: employ a first threshold voltage to distinguish between a relatively low DC bias voltage placed across the two audio signal conductors by the device and a first relatively high DC bias voltage placed across the two audio signal conductors by the device; in response to the relatively low DC bias voltage placed across the two audio signal conductors, allow the analog audio signal to be conveyed through the separator circuit from the two audio signal conductors to the audio circuit; and in response to the first relatively high DC bias voltage across the two audio signal conductors, cease to allow an analog signal occurring on one of the two audio signal conductors to be conveyed through the separator circuit to the audio circuit.

Implementations may include, and are not limited to, one or more of the following features. The apparatus of may further include a microphone coupled to the audio circuit; and a MOSFET coupled to the microphone to enable the MOSFET to be operated to bypass the microphone, and having a gate coupled to the separator circuit, wherein the separator circuit is further structured to operate the gate of the MOSFET to cause the MOSFET to bypass the microphone in response to the first relatively high DC bias voltage across the two audio signal conductors.

The apparatus may further include a gain control component operable to control a gain of the audio circuit to compensate for a characteristic of the acoustic driver in response to being accessed and set with a first piece of digitally-encoded data through the two audio signal conductors by the device, wherein: the first piece of digitally-encoded data represents a setting for the gain control component; and the separator circuit is further structured to operate at least the two audio signal conductors as a digital serial bus to enable the first piece of digitally-encoded data to be exchanged between the gain control component and the device through the separator circuit and the two audio signal conductors in response to the first relatively high DC bias voltage across the two audio signal conductors to enable the gain control component to be set with the setting. The gain control component may be a digital potentiometer, and the first piece of digitally-encoded data represents a resistance setting; or may be an amplifier, and the first piece of digitally-encoded data represents a gain setting. The gain control component may include a plurality of storage locations able to store a second piece of digitally-encoded data concerning a characteristic of one of the microphone and the acoustic driver; and the separator circuit is further structured to operate at least the two audio signal conductors as a digital serial bus to enable the second piece of digitally-encoded data to be exchanged between the gain control component and the device through the separator circuit and the two audio signal conductors in response to the first relatively high DC bias voltage across the two audio signal conductors to enable the second piece of digitally-encoded data to be retrieved from one of the plurality of storage locations. The second piece of digitally-encoded data may represent data concerning a characteristic of the electro-acoustic transducer, the characteristic being one of a set consisting of: a measured realizable range of frequencies, a measured resistance across a specific range of frequencies, a measured level of sensitivity across a specific range of frequencies, a serial number enabling a measured characteristic of the electro-acoustic transducer to be obtained from a record, an identity of a manufacturer of the electro-acoustic transducer enabling the manufacturer to be contacted to obtain a measured characteristic of the electro-acoustic transducer, a history of repairs, a history of refurbishment, and a note concerning a suspected mode of failure.

The apparatus may further include a third audio signal conductor coupled to the separator circuit, wherein the separator circuit is further structured to allow another analog signal representing a test sound and provided by the device on the third audio signal conductor and one of the two audio signal conductors to pass through the separator circuit as the separator circuit continues to operate the MOSFET to bypass the microphone to enable a test of the acoustic driver. The apparatus may provides ANR; the audio circuit may include an ANR compensator; the audio circuit may be structured to derive anti-noise sounds as the derived sound; and the test of the acoustic driver may test an operation of the acoustic driver with the ANR compensator.

The apparatus may further include a storage having a plurality of storage locations able to store a first piece of digitally-encoded data and able to provide the first piece of digitally-encoded data in response to being accessed to retrieve the first piece of digitally-encoded data through the two audio signal conductors by the device, wherein: the first piece of digitally-encoded data concerns a characteristic of one of the microphone and the acoustic driver; and the separator circuit is further structured to operate at least the two audio signal conductors as a digital serial bus to enable the first piece of digitally-encoded data to be exchanged between the gain control component and the device through the separator circuit and the two audio signal conductors in response to the first relatively high DC bias voltage across the two audio signal conductors to enable the first piece of digitally-encoded data to be retrieved by the device. The first piece of digitally-encoded data may represent data concerning a characteristic of the microphone, the characteristic being one of a set consisting of: a measured realizable range of frequencies, a measured resistance across a specific range of frequencies, a measured level of sensitivity across a specific range of frequencies, a serial number enabling a measured characteristic of the electro-acoustic transducer to be obtained from a record, an identity of a manufacturer of the electro-acoustic transducer enabling the manufacturer to be contacted to obtain a measured characteristic of the electro-acoustic transducer, a history of repairs, a history of refurbishment, and a note concerning a suspected mode of failure. The separator circuit may include a Zener diode having a threshold voltage that defines the first threshold voltage employed by the separator circuit to distinguish between the relatively low and the first relatively high DC bias voltages.

In another aspect, a method includes applying a relatively high DC bias voltage across two audio signal conductors of an apparatus to cause the apparatus to cease to operate in an audio mode in which an analog audio signal conveyed through two audio signal conductors of the apparatus from a device coupled to the two audio signal conductors is allowed to pass through a separator circuit of the apparatus to be acoustically output by an acoustic driver of the apparatus.

Implementations may include, and are not limited to, one or more of the following features. The method may further include selecting the two audio signal conductors from among a plurality of at least three or more audio signal conductors of the apparatus to cause the separator circuit to operate a gate of a MOSFET of the apparatus to bypass a microphone of the apparatus to prevent the microphone from providing another analog audio signal representing sounds detected by the microphone to an audio circuit of the apparatus for being acoustically output by the acoustic driver.

The method may further include operating the two audio signal conductors as digital serial bus to write a first piece of digitally-encoded data through the two audio signal conductors and through the separator circuit to a gain control component of the apparatus to set a gain setting of the gain control component. The method may yet further include operating the two audio signal conductors as a digital serial bus to retrieve a second piece of digitally-encoded data from a storage location of the gain control component, wherein the second piece of digitally-encoded data represents data concerning a characteristic of one of the acoustic driver and a microphone of the apparatus, the characteristic being one of a set consisting of: a measured realizable range of frequencies, a measured resistance across a specific range of frequencies, a measured level of sensitivity across a specific range of frequencies, a serial number enabling a measured characteristic of the electro-acoustic transducer to be obtained from a record, an identity of a manufacturer of the electro-acoustic transducer enabling the manufacturer to be contacted to obtain a measured characteristic of the electro-acoustic transducer, a history of repairs, a history of refurbishment, and a note concerning a suspected mode of failure.

Other features and advantages of the invention will be apparent from the description and claims that follow.

### DESCRIPTION OF THE DRAWINGS

Figure 1a is a block diagram of an acoustic driver having a storage for data transferred via its audio signal conductors.
Figure 1b is a signal diagram depicting differing DC voltage levels at which analog audio signals and digitally-encoded data are transferred via the audio signal conductors of the acoustic driver of Figure 1a.
Figure 2a is a block diagram of an electret microphone having a storage for data transferred via its audio signal conductors and/or an amplifier tunable with data transferred via its audio signal conductors.
Figure 2b is a signal diagram depicting differing DC voltage levels at which analog audio signals and digitally-encoded data are transferred via the audio signal conductors of the electret microphone of Figure 2a.
Figure 3a is a block diagram of a two-way speaker with a crossover having a storage for data transferred via its audio signal conductors and/or gain control components tunable with data transferred via those audio signal conductors.
Figure 3b is a signal diagram depicting differing DC voltage levels at which analog audio signals and digitally-encoded data are transferred via the audio signal conductors of the two-way speaker of Figure 3a.
Figure 4a is a perspective view of a two-way communications headset.
Figure 4b is a block diagram of the headset of Figure 4a depicting a storage for data transferred via audio signal conductors of the headset and/or gain control components tunable with data transferred via those audio signal conductors.
Figure 5a is a perspective view of a pair of ANR headphones.
Figure 5b is a block diagram of the pair of ANR headphones of Figure 5a depicting a storage for data transferred via audio signal conductors of the pair of ANR headphones and/or gain control components tunable with data transferred via those audio signal conductors.
Figure 6a is a perspective view of a headset providing both two-way communications and ANR.
Figure 6b is a block diagram of a portion of the headset of Figure 6a depicting the ability of its audio signal conductors to support various tests in addition to data transfers of stored data and/or settings of gain control components.
Figure 7a is a perspective view of a two-way communications headset.
Figure 7b is a block diagram of a possible electrical architecture of the headset of Figure 7a depicting a storage for data transferred via audio signal conductors of the headset and/or gain control components tunable with data transferred via those audio signal conductors.
Figure 7c is a block diagram of a signal processor of the electrical architecture of Figure 7b.
Figure 8a is a sectional view of a dual-ported microphone assembly providing some ability to separate and detect human speech from other sounds.
Figure 8b is a block diagram of the microphone assembly of Figure 8a depicting a storage for data concerning the microphone assembly and/or a microphone incorporated into the microphone assembly.
Figures 9a and 9b are perspective views from different angles of a wireless two-way communications headset.
Figure 9c is a block diagram of a possible electrical architecture of the headset of Figures 9a and 9b depicting a storage for data transferred via audio signal conductors and/or via a wireless link of the headset and/or gain control components tunable with data transferred via those audio signal conductors and/or that wireless link.

### DETAILED DESCRIPTION

What is disclosed and what is claimed herein is intended to be applicable to a wide variety of electro-acoustic transducers and devices incorporating electro-acoustic transducers. Alternatively and/or additionally, what is disclosed and what is claimed herein is intended to be applicable to a wide variety of devices incorporating electro-acoustic transducers and incorporating audio signal conductors by which those devices are able to be coupled to other devices to exchange analog audio signals representing audio. This includes personal devices carried or worn by a person such as headphones, active noise reduction (ANR) headsets, two-way communications headsets (e.g., pilot headsets), wireless headsets (a.k.a., "earsets"), earphones (a.k.a., "earbuds"), clip-on microphones, walkic-talkics and cell phones, as well as the relatively small electro-acoustic transducers often incorporated into such devices (e.g., discrete dynamic or electret microphone elements, etc.). This also includes devices that are more stationary in nature such that they are normally meant to occupy a particular location within a room or other space, such as boxed speakers, self-amplified speakers, surround sound satellite speakers, center channel speakers, subwoofers, speakers incorporating multiple acoustic drivers controlled through a crossover, electrostatic speakers, suspended or podium microphones, professional recording microphones, camera microphones, as well as the relatively larger electro-acoustic transducers often incorporated into such devices (e.g., tweeters, woofers, mid-range acoustic drivers, Mylar film acoustic drivers, etc.).

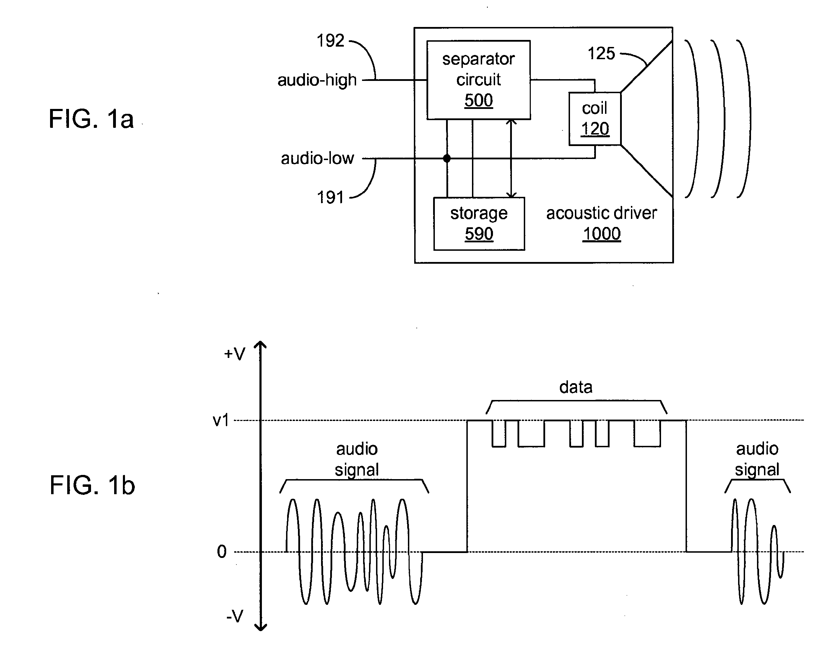

**Figure 1a** is a block diagram of an acoustic driver 1000, and **Figure 1b** is a diagram of voltage activity across audio signal conductors of the acoustic driver 1000 to aid in distinguishing analog signals conveying audio from other signals conveying digitally-encoded data. As will be familiar to those skilled in the art, the acoustic driver 1000 is a form of electro-acoustic transducer. In the case of the acoustic driver 1000, the transduction that takes places is a conversion of electrical energy in the form of analog signals representing a sound received by the acoustic driver 1000 via an audio-low conductor 191 and an audio-high conductor 192 (i.e., via a pair of audio signal conductors) being converted into acoustic energy in the form of the acoustic output of the sound through a coil 120 and a diaphragm 125. The acoustic driver 1000 incorporates the coil 120, the diaphragm 125, the audio-low conductor 191, the audio-high conductor 192, a separator circuit 500 and a storage 590. The audio-low conductor is coupled to each of the coil 120, the separator circuit 500 and the storage 590. The audio-high conductor 192 is coupled to the separator circuit 500, and in turn, the separator circuit 500 is AC-coupled to the coil 120 and the storage 590.

During normal operation of the acoustic driver 1000 in its intended role of acoustically outputting sounds (i.e., during it's "audio mode"), the acoustic driver 1000 is coupled via the audio-low conductor 191 and the audio-high conductor 192 to a source device (not shown) or to other components of a device into which the acoustic driver is also incorporated (also not shown), and the acoustic driver 1000 is provided with an analog signal representing sounds via these two audio signal conductors. As will be familiar to those skilled in the art, the audio-low conductor 191 and the audio-high conductor 192 are used together as a pair of audio signal conductors to convey such analog audio signals, with one serving as a return current path for the other. Such analog audio signals may include a relatively low direct current (DC) bias voltage (as depicted in Figure 1b, this low DC bias voltage may be no DC bias voltage, at all).

However, at other times when the acoustic driver 1000 is not being operated in its audio mode to acoustically output sounds, the acoustic driver 1000 may be coupled via the audio-low conductor 191 and the audio-high conductor 192 to another device (not shown) that exchanges pieces of digitally-encoded data with the acoustic driver 1000 (i.e., the acoustic driver 1000 is caused to enter into a "data mode"). This exchange of data is performed by using the audio-low conductor 191 and the audio-high conductor 192 together as a pair to form a digital serial bus, where the audio-high conductor 192 is employed as a serial data conductor and the audio-low conductor 191 is employed as the matching ground conductor. This use of these two audio signal conductors as a digital serial bus is accompanied with and is enabled by the provision of a relatively high bias voltage, depicted as the DC voltage level "v1" in Figure 1b, across these two audio signal conductors. Thus, these two audio signal conductors are employed to form a two-conductor digital serial bus using digital serial data transfer techniques well understood by those skilled in the art, but with the difference of being combined with a relatively high DC bias voltage.

The separator circuit 500 determines whether the acoustic driver 1000 is being operated in its audio mode or in its data mode by the magnitude of the DC bias voltage placed across the audio-low conductor 191 and the audio-high conductor 192 by an external device to which the acoustic driver 1000 is coupled via these two audio signal conductors. Where there is a relatively low DC bias voltage (possibly low enough that there is no DC bias voltage at all), the separator circuit 500 simply allows the alternating current (AC) component of analog audio signals (the portion of analog audio signals that actually represents sounds) to pass through the separator circuit 500 between the audio-high conductor 192 and another conductor coupling the separator circuit 500 to the coil 120, thereby providing a complete circuit between the audio-low conductor 191 and the audio-high conductor 192 through the separator circuit 500 and the coil 120 by which the aforedescribed process of transduction to acoustically output sounds takes place (i.e., the acoustic driver 1000 is operated in audio mode). However, where there is a relatively high DC bias voltage, the separator circuit 500 ceases to pass AC signals through the coil 120, and instead, enables the storage 590 to be accessed to at least allow digitally-encoded data stored within storage locations of the storage 590 to be retrieved from the storage 590 and output by the acoustic driver 1000 via the audio-high conductor 192 from the storage 590 (i.e., the acoustic driver 1000 is operated in data mode). Further, where the storage 590 is based on a technology that enables storage locations within the storage 590 to be rewritten (possibly stored in storage locations that are first electrically erased), storage locations within the storage 590 may be written with digitally-encoded data input to the acoustic driver 100 via these audio signal conductors to store new digitally-encoded data.

The separator circuit 500 may incorporate components that are selected and/or interconnected in a manner that imposes at least one threshold voltage against which whatever DC bias voltage is present across the audio-low conductor 191 and the audio-high conductor 192 is compared to distinguish a relatively high DC bias voltage that enables the data mode from a relatively low DC bias voltage that enables the audio mode. It is preferred that the threshold voltage be greater than the greatest magnitude of voltage that is expected to be placed across these two audio signal conductors due to the AC component of any analog audio signal representing audio that is expected to be provided to the acoustic driver 1000 via these two audio conductors. In some embodiments, the separator circuit 500 may be implemented with a capacitor interposed between the audio-high conductor 192 and the conductor coupling the separator circuit 500 to the coil 120, and with a Zener diode interposed between the audio-high conductor 192 and the storage 590. As will be familiar to those skilled in the art, each Zener diode has a threshold voltage, and a Zener diode incorporated into the separator circuit 500 may be selected to define a threshold voltage to be imposed by the separator circuit 500 to distinguish between the relatively high and relative low DC bias voltages associated with the data and audio modes, respectively.

The storage 590 may be any of a wide variety of types of storage device, but is preferably a solid-state electronic storage device that does not require an external supply of electric power to maintain data within it (i.e., what is commonly referred to as a "nonvolatile" storage device). Thus, the storage 590 may be based on any of a variety of nonvolatile solid-state data storage technologies, including and not limited to, electrically-erasable programmable read-only memory, FLASH, battery-back static random access memory (SRAM), etc. More specifically, in at least some embodiments, the storage 590 may be an EEPROM with a 1-Wire® digital serial bus interface (promulgated by and a registered trademark of Dallas Semiconductor, a division of Maxim Integrated Products of Sunnyvale, CA), and the separator circuit 500 may enable the audio-high conductor 192 to be operated as a digital serial bus that at least somewhat resembles a 1-Wire digital serial bus while the acoustic driver 1000 is being operated in data mode.

In some embodiments, the storage 590 may store any of a variety of pieces of data concerning operating characteristics of the acoustic driver 1000 derived from testing of the acoustic driver 1000, perhaps by its manufacturer. Such characteristics could include, but are not limited to, a range of frequencies able to be acoustically output, actual measured resistance of the coil 120, a measured variation in acoustic output across a specified range of frequencies, etc. Alternatively and/or additionally, such data as a serial number, a date of manufacture and/or an identity of the manufacturer may be stored. A stored serial number may enable desired characteristics to be obtained from records of testing done by the manufacturer of the acoustic driver 1000. Also alternatively and/or additionally, a history of repairs and/or refurbishing, installations in one or more devices, whether or not the acoustic driver 1000 is a replacement of another acoustic driver 1000, etc., may be stored, thereby enabling future decisions regarding repair or replacement to be made with knowledge of the past, especially if there are suspicions of a recurring failure that is difficult to verify.

It should be noted that although Figure 1b depicts occurrences of analog audio signals in the same graph alongside an occurrence of a exchange of digitally-encoded data, this such depiction should not be taken as suggesting that such a combination of different uses of the audio-high conductor 192 and the audio-low conductor 191 must necessarily be interwoven in this way. In some situations, it may be that the acoustic driver 1000 is coupled by these two audio signal conductors to a single device (or components of a single device into which the acoustic driver 1000 is incorporated) capable of engaging in both the provision of analog audio signals to the acoustic driver 1000 and the exchange of digitally-encoded data. However, it is also contemplated that there will be situations in which the exchange of digitally-encoded data occurs principally at the time the acoustic driver 1000 (or a device into which the acoustic driver 1000 is being incorporated) is manufactured, replaced and/or repaired. And, that otherwise, these audio conductors are normally employed solely for the provision of analog audio signals to the acoustic driver 1000. In other words, as described earlier in reference to Figures 1a-b, the acoustic driver 1000 may be operated in audio mode when coupled to one device and be operated in data mode when coupled to another device. Therefore, Figure 1b, although suggestive of there being an interweaving of being operated in audio mode and in data mode by a single device to which the acoustic driver 1000 may be coupled, Figure 1b should not be taken as mandating this.

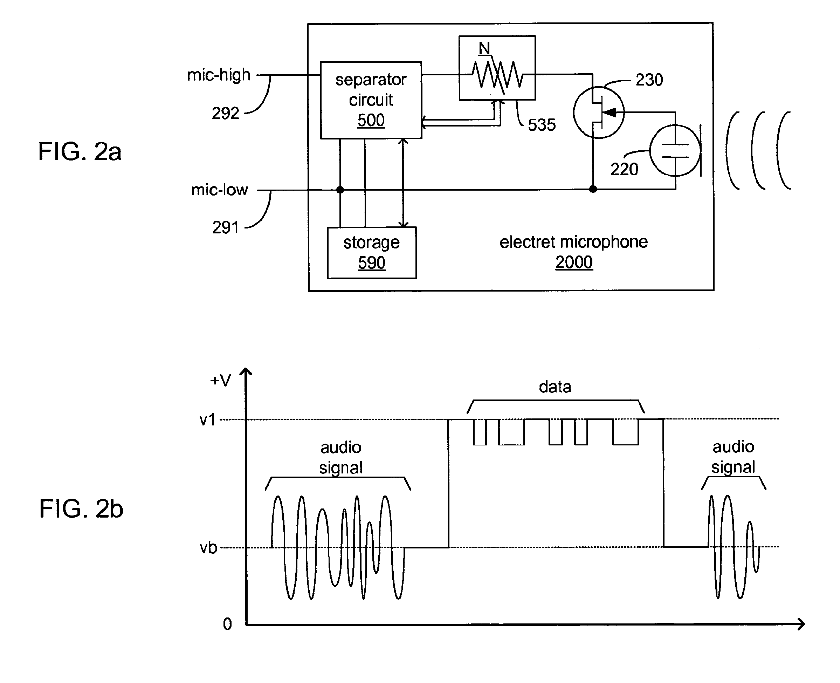

**Figure 2a** is a block diagram of an electret microphone 2000, and **Figure 2b** is a diagram of voltage activity across audio signal conductors of the electret microphone 2000 to aid in distinguishing analog signals conveying audio from other signals conveying digitally-encoded data. As will be familiar to those skilled in the art, the electret microphone 2000 is another form of electro-acoustic transducer. In the case of the electret microphone 2000, the transduction that takes places is a conversion of acoustic energy in the form of a sound vibrating a conductive diaphragm spaced away from a conductive plate (these two conductive components being within an electret element 200 depicted in Figure 2a) resulting in a changing capacitance that is converted by an amplifying device of the electret microphone (in this case, a JFET 230, as depicted in Figure 2a) into electrical energy in the form of analog signals representing the sound vibrating the conductive diaphragm (more succinctly, a conversion from acoustic energy to electrical energy). In other words, the sound is, in this way, detected by the electret element 200, and the JFET 230 creates these analog audio signals representing the sound. These analog signals representing the detected sound are output by the electret microphone 2000 via a mic-low conductor 291 and a mic-high conductor 292 (i.e., via a pair of audio signal conductors of the electret microphone 2000). The electret microphone 2000 incorporates an electret element 220 made up of the conductive diaphragm and conductive plate, the JFET 230, a separator circuit 500, and one or both of a digital potentiometer 535 and a storage 590. The mic-low conductor 291 is coupled to each of the electret element 220, the JFET 230, the separator circuit 500 and the storage 590 (if present). The mic-high conductor 292 is coupled to the separator circuit 500, and in turn, the separator circuit 500 is coupled to the electret element 220 through the digital potentiometer 535 (if present) and the JFET 230.

During normal operation of the electret microphone 2000 in its intended role of electrically outputting an analog signal representing sounds detected by the electret element 220 (i.e., during it's "audio mode"), the electret microphone 2000 is coupled via the mic-low conductor 291 and the mic-high conductor 292 to a receiving device (not shown) or to components of a device into which the electret microphone 2000 is incorporated (also not shown) that provides the electret microphone 2000 with a relatively low DC bias voltage (depicted as "vb" in Figure 2b) by which a voltage potential is provided to charge the conductive diaphragm and the conductive plate of the electret element 220 (to enable the creation of the aforementioned changing capacitance), and by which power is provided to the JFET 230 to enable its operation as a amplifier. As will be familiar to those skilled in the art, the mic-low conductor 291 and the mic-high conductor 292 are used together as a pair of audio signal conductors both to provide such a relatively low DC bias voltage to the electret microphone 2000, and to receive an analog audio signal from the electret microphone 2000 in the form of an AC signal component superimposed on the relatively low DC bias voltage, as depicted in Figure 2b.

However, at other times when the electret microphone 2000 is not being operated in its audio mode to electrically output analog signals representing detected sounds, the electret microphone 2000 may be coupled via the mic-low conductor 291 and the mic-high conductor 292 to another device (not shown) that exchanges digitally-encoded data with the electret microphone 2000 (i.e., the electret microphone 2000 is caused to enter into a "data mode"). In a manner very much like what has been discussed with regard to the acoustic driver 1000, this exchange of data is performed by using the mic-low conductor 291 and the mic-high conductor 292 together as a pair to form a digital serial bus, where the mic-high conductor 292 is employed as a serial data conductor and the mic-low conductor 291 is employed as the matching ground conductor. This use of these two conductors as a digital serial bus is accompanied with and is enabled by the provision of a relatively high bias voltage, depicted as the voltage level "v1" in Figure 2b, across these two conductors.

In a manner very much like what was discussed with regard to the acoustic driver 1000, the separator circuit 500 determines whether the electret microphone 2000 is being operated in its audio mode or in its data mode by the magnitude of the bias voltage placed across the mic-low conductor 291 and the mic-high conductor 292 by an external device to which the electret microphone 2000 is coupled via these two audio signal conductors. Where there is the relatively low DC bias voltage (vb) required for normal operation of the electret microphone 2000 the separator circuit 500 simply allows the alternating current (AC) component of analog audio signals representing detected sounds to pass through the separator circuit 500 from amplified output of the JFET 230 (and possibly through the digital potentiometer 535) and to the mic-high conductor 292, thereby providing a complete circuit between the mic-low conductor 291 and the mic-high conductor 192 through the separator circuit 500.

However, where there is a relatively high DC bias voltage (v1), the separator circuit 500 ceases to pass AC signals received from the JFET 230, and instead, enables one or both of the digital potentiometer 535 and the storage 590 to be accessed. Some embodiments of the electret microphone 2000 may incorporate the digital potentiometer 535, while others may incorporate the storage 590, and still others may incorporate both. Where both are incorporated, a protocol and/or device selection scheme (e.g., device addressing) may be employed to select one or the other for being accessed through operation of the mic-low conductor 291 and the mic-high conductor 292 as a digital serial bus.

Where the storage 590 is present, it may be any of a wide variety of types of storage device, and is preferably a solid-state electronic storage device that does not require an external supply of electric power to maintain data within it (i.e., it is nonvolatile data storage). Also, not unlike the storage 590 of the acoustic driver 1000, the storage 590 of the electret microphone 2000 may store any of a variety of pieces of data concerning operating characteristics of the electret microphone 2000 derived from testing of the electret microphone 2000, perhaps by its manufacturer. Such characteristics could include, but are not limited to, average sensitivity, a range of frequencies of sounds able to be detected, an actual measured resistance, a measured variation in amplitude of analog signal output across a specified range of frequencies, etc. Alternatively and/or additionally, such data as a serial number, a date of manufacture and/or an identity of the manufacturer may be stored by which data concerning characteristics of the electret microphone 2000 measured by its manufacturer may then be obtained from records kept by the manufacturer (or others). Also alternatively and/or additionally, a history of repairs and/or refurbishing, installations in one or more devices, whether or not the electret microphone 2000 is a replacement of another electret microphone 2000, etc., may be stored, thereby enabling future decisions regarding repair or replacement to be made with knowledge of the past, especially if there are suspicions of a recurring failure that is difficult to verify. Again, the exchange of digitally-encoded data across the digital serial bus formed with these two audio conductors may be employed to at least retrieve data stored within storage locations of the storage 590, if not also to write data into storage locations of the storage 590 (i.e., store new digitally-encoded data).

Where the digital potentiometer 535 is present, it is a digitally controllable variable resistor in which the resistance it imposes on the coupling between the output of the JFET 230 and the separator circuit 500 is tunable (i.e., can be varied) with digital data received by the electret microphone 2000 during data mode that correlates to a chosen amount of resistance to which the digital potentiometer 535 is to be set. Through the digital potentiometer 535, the gain in the analog signal provided by the JFET 230 is able to be controlled such that the digital potentiometer 535 serves as a gain control component of the electret microphone 2000. Having such a gain control component may be deemed desirable where a specific sensitivity of the electret microphone 2000 for a specific range of frequencies is desired, and variances in the sensitivities of different ones of the electret microphone 2000 are being encountered as they are manufactured such that being able to tune the sensitivity with the digital potentiometer 535 allows a manufacturer to provide multiple ones of the electret microphone 2000 with a consistent sensitivity (perhaps a desired sensitivity that fits an ideal standard that the manufacturer wants to achieve with each one of those electret microphones).

The exchange of digitally-encoded data across the digital serial bus formed with these two audio conductors may be employed to at least write digitally-encoded data representing a chosen amount of resistance to the digital potentiometer 535. Further, this same digital serial bus may also be employed to retrieve digitally-encoded data from the digital potentiometer 535 that represents the amount of resistance to which the digital potentiometer 535 is currently set, if the digital potentiometer 535 supports such retrieval of data. Still further, in some embodiments, the digital potentiometer 535 may incorporate one or more storage locations into which digitally-encoded data representing information other than a resistance setting for the digital potentiometer 535 may be stored. In such embodiments, this may obviate the need to incorporate the separate storage 590 to provide storage locations for storage of data representing characteristics of the electret microphone 2000.

In the cases of both the acoustic driver 1000 and the electret microphone 2000, incorporating the storage 590 (and/or incorporating a variant of the digital potentiometer 535 having storage locations for data) in which is stored data specifying actual measured characteristics, allows adjustments to be made to other components of a device into which either of these electro-acoustic transducers may be incorporated to compensate for variances in those characteristics from a desired ideal of those characteristics (whether the ideal characteristics are those sought be achieved by the manufacturer of one of these electro-acoustic transducers, or are those sought after by the manufacturer of a device into which one of these electro-acoustic transducers is being incorporated). Alternatively and/or additionally, incorporating the storage 590 (and/or incorporating a variant of the digital potentiometer 535 having storage locations for data) in which data specifying actual measured characteristics is stored also allows replacement ones of the acoustic driver 1000 and/or the electret microphone 2000 having similar characteristics to be readily identified and selected for use when an earlier-installed one of these electro-acoustic transducers needs to be replaced in a device that is being serviced, thereby obviating the need to repeat the process of tuning another component (e.g., a gain control component such as the digital potentiometer 535 of Figure 2a) within that device to compensate for different characteristics of a replacement one of these electro-acoustic transducers. Similarly, where a component of a device incorporating one of the acoustic driver 1000 and/or of the electret microphone 2000 needs to be replaced, and that component incorporates a tunable component (e.g., a gain control component such as the digital potentiometer 535 of Figure 2a) that was tuned to compensate for a specific one of these electro-acoustic transducers, the data specifying measured characteristics of that one of these electro-acoustic transducers could be used to recreate the same tuning in the replacement component.

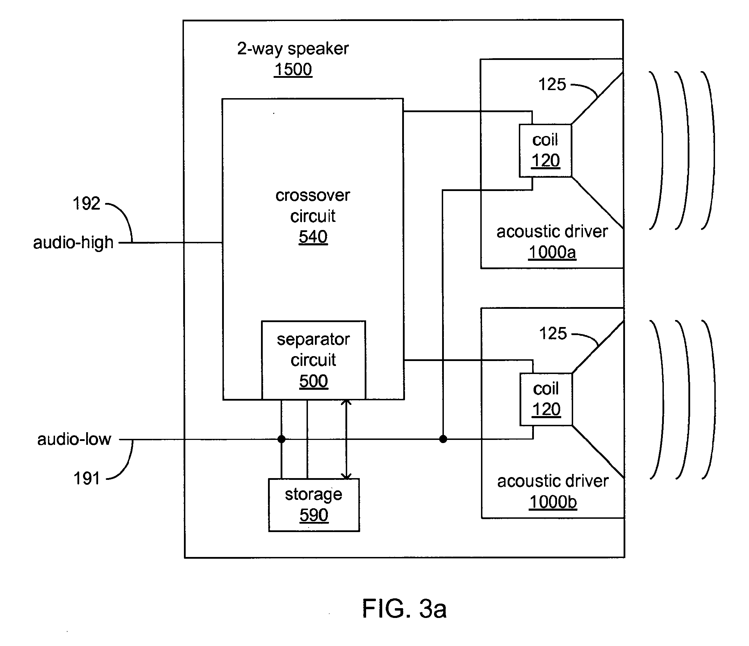

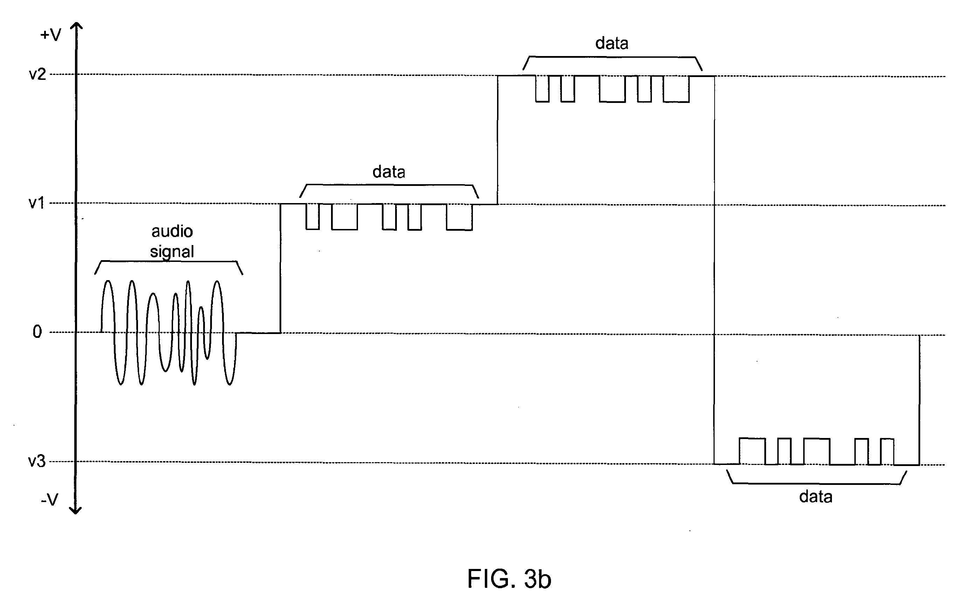

**Figure 3a** is a block diagram of a two-way speaker 1500. and **Figure 3b** is a diagram of voltage activity across audio signal conductors of the two-way speaker 1500 to aid in distinguishing analog signals conveying audio from other signals conveying digitally-encoded data. As will be familiar to those skilled in the art, the two-way speaker 1500 receives an analog audio signal representing a sound to be acoustically output through a pair of audio signal conductors in a manner very much like a single acoustic driver (e.g., the acoustic driver 1000 of Figure 1a). However, the two-way speaker 1500 has a crossover circuit 540, an audio circuit that is employed to manipulate the received analog audio signal representing that sound by separating it into two separate analog audio signals that each represent portions of the original sound that occupy only a subset of the original range of audible frequencies of the original sound and that are separately provided to separate ones of the acoustic drivers 1000a and 1000b. The two-way speaker 1500 incorporates a separator circuit 500, the crossover circuit 540, a storage 590, and the pair of acoustic drivers 1000a and 1000b. In a manner very much like the acoustic driver 1000, the audio-low conductor 191 is coupled to each of the crossover circuit 540 (including the separator circuit 500 incorporated into the crossover circuit 540, as depicted), the storage 590, and a coil 120 incorporated into each of the acoustic drivers 1000a and 1000b. The audio-high conductor 192 is coupled to the crossover circuit 540 (including the separator circuit 500), and in turn, the crossover circuit 540 is AC-coupled with separate conductors to coils 120 of each of the acoustic drivers 1000a and 1000b.

Very much like the acoustic driver 1000, the normal operation (i.e., the "audio mode") of the two-way speaker 1500 entails being coupled via the audio-low conductor 191 and the audio-high conductor 192 to a source device (not shown) that provides the two-way speaker 1500 with an analog audio signal representing sounds to be acoustically output. Again, the analog signal may include a relatively low DC bias voltage (as depicted in Figure 3b, this relatively low DC bias voltage may be no DC bias voltage, at all).

However, unlike the acoustic driver 1000, the acoustic drivers 1000a and 1000b of the two-way speaker 1500 do not, themselves, incorporate a storage device within which digitally-encoded data may be stored. Instead, the storage 590 is coupled to (or may alternatively be incorporated into) the crossover circuit 540 into which the separator circuit 500 is incorporated. Within the storage 590 may be stored data concerning characteristics of each of the acoustic drivers 1000a and 1000b to enable the tuning of one or more gain control components (not shown) of the crossover circuit 540 to compensate for variances in each of their measured acoustic outputs, the range of frequencies each is capable of acoustically outputting, and/or other characteristics of each. Alternatively and/or additionally, a history of repairs and/or refurbishing, replacements of one or both of the acoustic drivers 1000a or 1000b (and/or of other components), etc., may be stored, thereby enabling future decisions regarding repair or replacement to be made with knowledge of the past, especially if there are suspicions of a recurring failure that is difficult to verify.

At other times when the two-way speaker 1500 is not being operated in its audio mode to acoustically output sounds, the acoustic driver 1000 may be coupled via the audio-low conductor 191 and the audio-high conductor 192 to another device (not shown) that uses the audio-low conductor 191 and the audio-high conductor 192 together as a pair to form a digital serial bus to exchange digitally-encoded data. Very much like the acoustic driver 1000 and the electret microphone 2000, this use of these two audio signal conductors as a digital serial bus is accompanied with and is enabled by the provision of a relatively high DC bias voltage to enable the "data mode" of the two-way speaker 1500. However, turning to Figure 3b, the separator circuit 500 of the two-speaker 1500 is somewhat more sophisticated and can be triggered to exchange different pieces of digital data depending on the magnitude of the relatively high DC bias voltage that is applied to the audio-low conductor 191 and the audio high conductor 192. More precisely, different pieces of digital data are exchanged depending on which one of two relatively high DC bias voltages ("v1" or "v2") is applied to those audio signal conductors.

The separator circuit 500 determines whether the two-way speaker 1500 is being operated in its audio mode or in its data mode by the magnitude of the DC bias voltage placed across the audio-low conductor 191 and the audio-high conductor 192. Where there is a relatively low DC bias voltage (including where there is no DC bias voltage, at all), the separator circuit 500 simply allows the alternating current (AC) component of analog audio signals representing sounds to simply be received and split into two ranges of frequencies that each represent a subset of the full range of frequencies of those sounds by the crossover circuit 540, and then allows separate analog audio signals representing the different ones of those subsets of the sounds to be conveyed by the crossover circuit 540 to the coils 120 of different ones of the acoustic drivers 1000a and 1000b. However, where there is a relatively high DC bias voltage (either "v1" or "v2"), the separator circuit 500 cooperates with the crossover circuit 540 to cease to pass signals to the coils 120 of the acoustic drivers 1000a and 1000b, and instead, enables the exchange of digital data.

In some embodiments, the ability of the separator circuit 500 of the two-way speaker 1500 to distinguish between the different relatively higher DC bias voltages "v1" and "v2" enables different memory locations within the storage 590 to be accessed, perhaps to enable a choice between accessing data concerning one or the other of the acoustic drivers 1000a and 1000b. Thus, the choice between "v1" and "v2" becomes somewhat akin to manipulating an address bit in a memory addressing scheme. In other embodiments, the ability to distinguish between these two relatively high DC bias voltages enables a selection between accessing the storage 590 to retrieve data from it and accessing the storage 590 to write new data into it so as to store that new data within the storage 590. Thus, the choice between "v1" and "v2" becomes a choice between reading and writing data operations. In still other embodiments, the ability to distinguish between these two relatively high DC bias voltages enables a selection between accessing the storage 590 and accessing one or more digital potentiometers and/or one or more other forms of gain control devices that may be incorporated into the crossover circuit 540 (e.g., amplifiers with variable gain). Thus, the choice between "v1" and "v2" becomes a form of device selector or "chip select" signal. Again, one or more of any gain control devices may incorporate data storage locations unrelated to whatever settings associated with gain to which those gain control devices may be set, thereby obviating the need for the storage 590 to provide data storage. Where the differing ones of the relatively high DC bias voltages are employed as a form of chip select, the selection may be between one or more of such gain control devices associated with one of the acoustic drivers 1000a and 1000b versus one or more of such gain control devices associated with the other, with data concerning characteristics of each of the acoustic drivers 1000a and 1000b being separately stored in the one or more gain control devices separately associated with each.

**Figure 3b** further depicts an alternative to employing relatively high DC bias voltages of differing magnitudes in addressing schemes, or selection between read and write operations and/or between different components for access. In particular, in addition to the relatively high DC bias voltages "v1" and "v2" having the same polarity, Figure 3b also depicts a relatively high DC bias voltage "v3" having a relatively high magnitude that is to the magnitude of the "v1" DC bias voltage, but an opposite polarity. This may be deemed desirable as enabling variants of the separator circuit 500 in which different Zener diodes having the same threshold voltage, but interconnected to respond to relatively high bias voltages of opposing polarities to provide more complex functionality in a variation of the separator circuit 500 that remains of relatively simple design.

It should be noted that although Figure 3b depicts an occurrence of analog audio signals in the same graph alongside occurrences of exchanges of digitally-encoded data, this such depiction should not be taken as suggesting that such a combination of different uses of the audio-high conductor 192 and the audio-low conductor 191 must necessarily be interwoven in this way. In other words, differing devices supporting only one or the other of the provision of analog audio signals and the exchange of digitally-encoded data may be coupled via these audio signal conductors to the two-way speaker 1500, as well as a single device supporting both, and perhaps supporting interweaving these different uses of these audio signal conductors. Therefore, Figure 3b, although suggestive of there being an interweaving of being operated in audio mode and in data mode by a single device to which the two-way speaker 1500 may be coupled, Figure 3b should not be taken as mandating this.

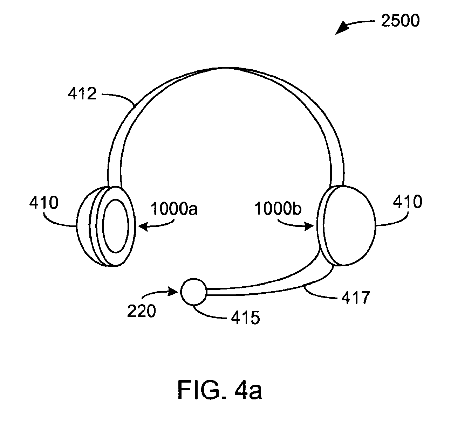

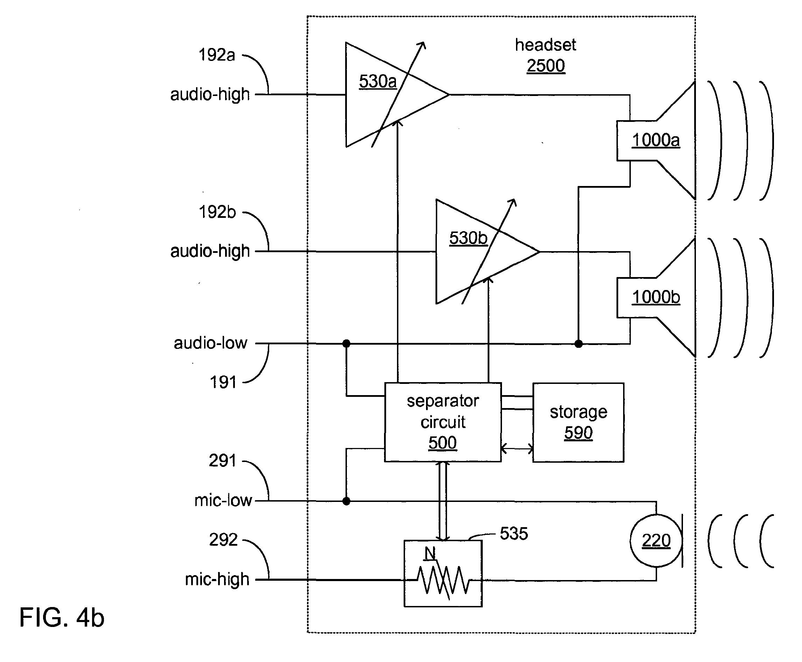

**Figure 4a** is a perspective view of a two-way communications headset 2500, and **Figure 4b** is a block diagram of the headset 2500. In a manner that will be familiar to those skilled in the art, the headset 2500 both receives analog audio signals representing left and right audio channels of sound to be acoustically output by a pair of acoustic drivers 1000a and 1000b through a trio of audio signal conductors, and outputs a different analog audio signal representing a different sound that is detected by a microphone 220 through a pair of different audio signal conductors. Regarding its physical configuration, the headset 2500 incorporates a pair of earpieces 410 incorporating one each of the acoustic drivers 1000a and 1000b, a headband 412 coupling together the pair of earpieces 410, a microphone casing 415 within which is positioned the microphone 220, and a microphone boom 417 coupling the microphone casing 415 to one of the earpieces 410. Regarding its electrical architecture, the headset 2500 incorporates the microphone 220, a separator circuit 500, a pair of amplifiers 530a and 530b, a digital potentiometer 535, and pair of acoustic drivers 1000a and 1000b.

In a manner very much like the acoustic driver 1000 of Figure 1a, an audio-low conductor 191 is coupled to each of the separator circuit 500, the separator circuit 500, the storage 590, and the acoustic drivers 1000a and 1000b. Audio-high conductors 192a and 192b are coupled to the inputs of the amplifiers 530a and 530b, respectively, and in turn, the outputs of each of the amplifiers 530a and 530b are coupled to the acoustic drivers 1000a and 1000b, respectively. Further, like the electret microphone 2000 of Figure 2a, a mic-low conductor 291 is coupled to both the separator circuit 500 and the microphone 220. A mic-high conductor 292 is coupled to the digital potentiometer 535, and in turn, the digital potentiometer 535 is coupled to the microphone 220. The separator circuit 500 is further coupled to the amplifiers 530a and 530b, the digital potentiometer 535 and the storage 590.

During normal operation (i.e., the "audio mode"), the headset 2500 is coupled by the audio-low conductor 191, the audio-high conductors 192a-b, the mic-low conductor 291 and the mic-high conductor 292 to an intercom system or two-way radio (not shown) through which a user of the headset 2500 engages in two-way voice communications with another person. In the audio mode, analog audio signals conveying two audio channels of sounds to be acoustically output to the user by the acoustic drivers 1000a and 1000b are received by the headset 2500 through the audio-high conductors 192a and 192b, respectively, with the audio-low conductor 191 serving as a common return current path for these analog audio signals. Further, in the audio mode, analog audio signals representing sounds detected by the microphone 220 are output by the headset 2500 through the mic-low conductor 291 and the mic-high conductor 292. It should be noted that as depicted, the microphone 220 is a dynamic microphone, but as those skilled in the art will readily recognize, the microphone 220 may be an electret microphone in other possible embodiments.

As those skilled in the common practices of the design of two-way communications headsets will readily recognize, the audio-low and mic-low conductors are usually coupled together to a common ground within the intercom system or two-way radio to which the headset 2500 is coupled, and therefore, it is usually deemed undesirable to also couple these two conductors together within a headset, since doing so is likely cause a ground loop to be formed. Thus, during normal operation in audio mode, the audio-low conductor 191 and the mic-low conductor 291 are normally at (or close to) the same voltage level, despite not being coupled within the headset. And therefore, during audio mode, the separator circuit 500 is not provided with power via these two conductors, and in order to maintain the desired separation between these two conductors, the separator circuit maintains a very high impedance (preferably at several mega-ohms) between these two conductors.

However, at other times during which the headset 2500 is not being operated in its audio mode, the headset 2500 is provided (by whatever device to which the headset 2500 is coupled) with a DC bias voltage across the audio-low conductor 191 and the mic-low conductor 291. This provides the separator circuit 500 with power through these two conductors and serves to enable a "data mode" in which the headset 2500 is able to exchange digitally-encoded data with whatever device it is coupled to through these two conductors of separate sets of audio signal conductors. In other words, the audio-low conductor 191 and the mic-low conductor 291 are operated together as a pair to form digital serial bus to exchange digitally-encoded data. In some embodiments, the separator circuit 500 may incorporate a Zener diode to distinguish the DC bias voltage provided to enable the data mode from random voltage potentials across these two conductors that may arise as a result of these two conductors not being directly coupled within the headset 2500.

While in the data mode, the storage 590 may be accessed to store or retrieve data, including data concerning characteristics of one or more of the microphone 220 and the acoustic drivers 1000a and 1000b. Alternatively and/or additionally, a history of repairs and/or refurbishing, replacements of one or more of the microphone 220 and the acoustic drivers 1000a or 1000b (and/or of other components), etc., may be stored, thereby enabling future decisions regarding repair or replacement to be made with knowledge of the past, especially if there arc suspicions of a recurring failure that is difficult to verify (data representing a note could be stored describing an aspect of a suspected mode of failure for future reference). Again, this enables replacement of one or more of these electro-acoustic transducers with others having similar characteristics by providing data concerning those characteristics to speed the process of selecting replacement electro-acoustic transducers with similar characteristics. In embodiments in which the amplifiers 530a and 530b are present (rather than in embodiments where the audio-high conductors 192a and 192b are more directly coupled to the acoustic drivers 1000a and 1000b), the data mode may enable the gains of the amplifiers 530a and 530b to be adjusted (such that they are able to serve as gain control components), perhaps to accommodate differences in acoustic output levels of the acoustic drivers 1000a and 1000b from a desired ideal output level or from each other. Similarly, in embodiments in which the digital potentiometer 535 is present, the data mode may enable the resistance through the digital potentiometer 535 to be adjusted as a gain control component able to compensate for variances of the sensitivity (or other characteristics) of the microphone 220 from a desired ideal.

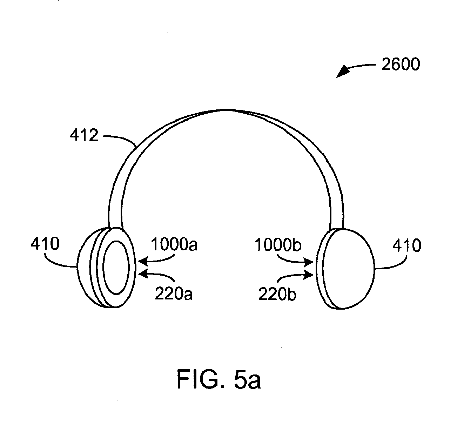

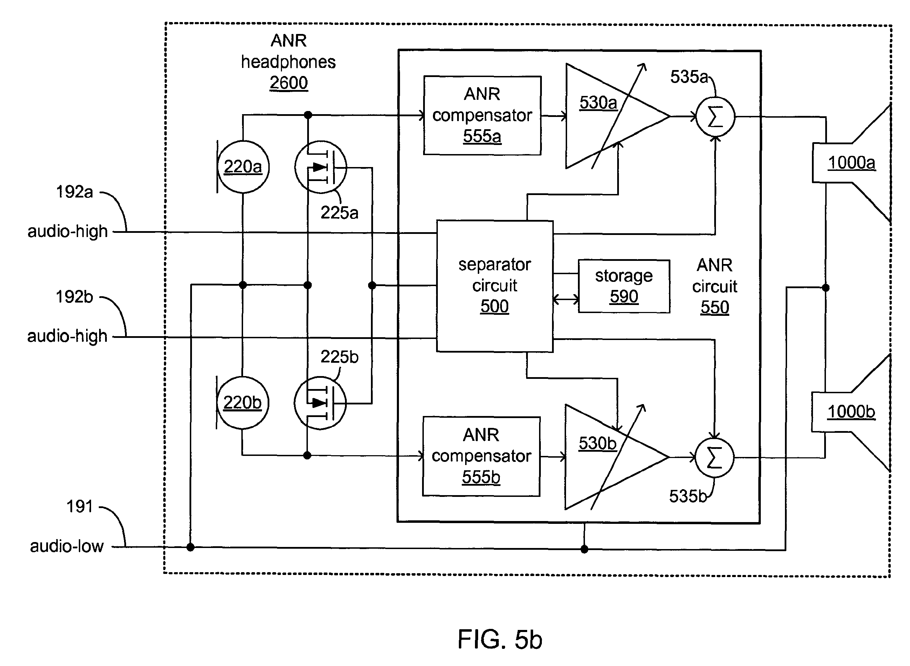

**Figure 5a** is a perspective view of a pair of ANR headphones 2600, and **Figure 5b** is a block diagram of the pair of ANR headphones 2600. In a manner that will be familiar to those skilled in the art, the pair of ANR headphones 2600 employs a pair of microphones 220a and 220b (one within each of a pair of earpieces 410) to detect undesired noise sounds, and employs a pair of acoustic drivers 1000a and 1000b (one within each of a pair of earpieces 410) to acoustically output sounds derived from the noise sounds detected by the pair of microphones 220a and 220b to reduce the acoustic strength of those noise sounds as perceived by a user of the pair of ANR headphones 2600. In addition to providing ANR, the pair of ANR headphones 2600 also receives analog signals representing audio from an audio source device (not shown) to also be acoustically output by the acoustic drivers 1000a and 1000b (e.g., music, a recording of a lecture, etc.) through a trio of audio signal conductors. Regarding its physical configuration, the headset 2500 incorporates a pair of earpieces 410 incorporating one each of the acoustic drivers 1000a and 1000b along with one each of the microphones 220a and 200b, and a headband 412 coupling together the pair of earpieces 410. Regarding its electrical architecture, the pair of ANR headphones 2600 incorporates the microphones 220a and 220b, a pair of MOSFETs 225a and 225b, an ANR circuit 550 and the acoustic drivers 1000a and 1000b. The ANR circuit 550, itself, incorporates a separator circuit 500, a pair of amplifiers 530a and 530b, a pair of summing nodes 535a and 535b, a pair of ANR compensators 555a and 555b, and a storage 590. As will be explained in greater detail, the ANR circuit 550 is an audio circuit that manipulates noise sounds by deriving anti-noise sounds from those original noise sounds for acoustic output to acoustically attenuate the original noise sounds.

An audio-low conductor 191 is coupled to each of the microphones 220a and 220b, the MOSFETs 225a and 225b, the ANR circuit 550 and the acoustic drivers 1000a and 1000b. Audio-high conductors 192a and 192b are coupled to the separator circuit 500 incorporated into the ANR circuit 550, which in turn, is coupled to one of the inputs of each of the summing nodes 535a and 535b, and in turn, the outputs of the summing nodes are coupled to the acoustic drivers 1000a and 1000b, respectively. The microphones 220a and 220b are coupled to the ANR compensators 555a and 555b (which internally bias the microphones 220a and 220b), which in turn, are coupled to the inputs of the amplifiers 530a and 530b, and in turn, the outputs of the amplifiers 530a and 530b arc coupled to other inputs of the summing nodes 535a and 535b, respectively. Further, the separator circuit 500 is further coupled to the MOSFETs 225a and 225b (which in turn are coupled to the microphones 220a and 220b, respectively), the amplifiers 530a and 530b, and the storage 590.

During normal operation (i.e., the "audio mode"), the microphones 220a and 220b detect undesired noise sounds in the vicinities of their respective ones of the earpieces 410, and provide signals representing those detected noise sounds to corresponding ones of the ANR compensators 555a and 555b, respectively. It should be noted, and as those skilled in the art of the provision of acoustic noise reduction (ANR) will readily recognize, in different embodiments, the microphones 220a and 220b may be disposed about their respective ones of the earpieces 410 to detect noises either within the earpieces 410 (i.e., to implement feedback-based ANR, as depicted in Figure 5a) or about external surfaces of the earpieces 410 (i.e., to implement feedforward-based ANR). Regardless of the exact nature of the ANR being provided, the compensators 555a and 555b derive anti-noise sounds from the detected noise sounds, and output signals representing those anti-noise sounds to the inputs of the amplifiers 530a and 530b, respectively. The amplifiers 530a and 530b amplify the anti-noise sounds, imparting an amount of gain to each, and output the amplified anti-noise sounds to the summing nodes 535a and 535b, respectively. The summing nodes 535a and 535b combine the amplified anti-noise sounds with the audio received from an external audio source device to which the pair of ANR headphones 2600 may be coupled through the trio of audio signal conductors (i.e., the audio-low conductor 191 and the audio-high conductors 192a and 192b) and through the separator circuit 500. The summing nodes 535a and 535b then convey the combined amplified anti-noise sounds and received audio to the acoustic drivers 1000a and 1000b, respectively.

However, at other times during which the pair of ANR headphones 2600 is not being operated in its audio mode, the pair of ANR headphones 2600 is provided (by whatever device to which the pair of ANR headphones 2600 is coupled) with a DC bias voltage across the audio-low conductor 191 and one or both of the audio-high conductors 192a and 192b. This enables one or more forms of a "data mode" in which the pair of ANR headphones 2600 is able to exchange pieces of digitally-encoded data with whatever device it is coupled to through at least two of these three audio signal conductors. In other words, the audio-low conductor 191 and the audio-high conductor 192a may be operated together as a pair to form a digital serial bus to exchange digitally-encoded data, and/or the audio-low conductor 191 and the audio-high conductor 192b may be operated together as a pair to form a digital serial bus to exchange digitally-encoded data. Indeed, through the separate provision of DC bias voltages across one or both of these two pairs of conductors, different digitally-encoded data and/or different components may be accessed, thereby providing a flexibility in selecting what data is exchanged that is not unlike the flexibility afforded by the use of differing magnitudes of DC bias voltage across a single pair of conductors depicted in Figure 3b. Alternatively, all three of the audio-low conductor 191 and the high conductors 192a and 192b may be operated together as a trio to form a more capable digital serial bus able to exchange pieces of digitally-encoded data more speedily (than a digital serial bus employing only two audio signal conductors, as previously described) through the use of separate conductors as data and handshake conductors, perhaps in a manner somewhat like the I2C digital serial bus promulgated by NXP of Eindhoven in the Netherlands.

The storage 590 may be accessed to store or retrieve pieces of digitally-encoded data, including data concerning characteristics of one or more of the microphones 220a and 220, and/or the acoustic drivers 1000a and 1000b. Again, this enables replacement of one or more of these electro-acoustic transducers with others having similar characteristics by providing data concerning those characteristics to speed the process of selecting replacement electro-acoustic transducers with similar characteristics. In embodiments in which the amplifiers 530a and 530b are present (rather than in embodiments where the outputs of the ANR compensators 555a and 555b are more directly coupled to the summing nodes 535a and 535b), the amplifiers 530a and 530b serve as gain control components by providing gains that are able to be adjusted, perhaps to accommodate differences in acoustic output levels of the acoustic drivers 1000a and 1000b from a desired ideal output level or from each other.

Further, in embodiments in which the MOSFETs 225a and 225b are present, either a command received by the separator circuit 500 as digitally-encoded data, or the mere presence of a particular magnitude of DC bias voltage across one of the aforedescribed pairs of conductors that may be operated as a digital serial bus may cause the operation of one or both of the MOSFETs 225a and 225b to bypass the coupling of one or both of the microphones 220a and 220b, respectively, to the audio-low conductor (presumably serving as a ground). In some variants of such embodiments, the gates of the MOSFETs 225a and/or 225b may be coupled to one of (or separately to both of) the audio-high conductors 192a and 192b through a Zener diode having a threshold voltage chosen to pass through a DC bias voltage of a particular voltage level (or higher) such that the mere presence of that DC bias voltage is enough to operate one or both of the MOSFETs 225a and 225b to bypass one or both of the microphones 220a and 220b. With one or both of the microphones 220a and 220b bypassed in this way, the corresponding one(s) of the ANR compensators 555a and 555b ceases to be provided with an input of detected noise sounds, thereby enabling various tests to be conducted of one or more of the ANR compensators 555a and/or 555b, the amplifiers 530a and/or 530b, the summing nodes 535a and/or 535b, and/or the acoustic drivers 1000a and/or 1000b in isolation from the functionality normally provided by the one or both of the microphones 220a and 220b.

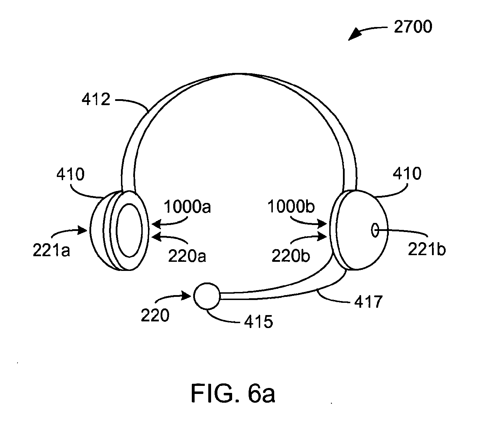

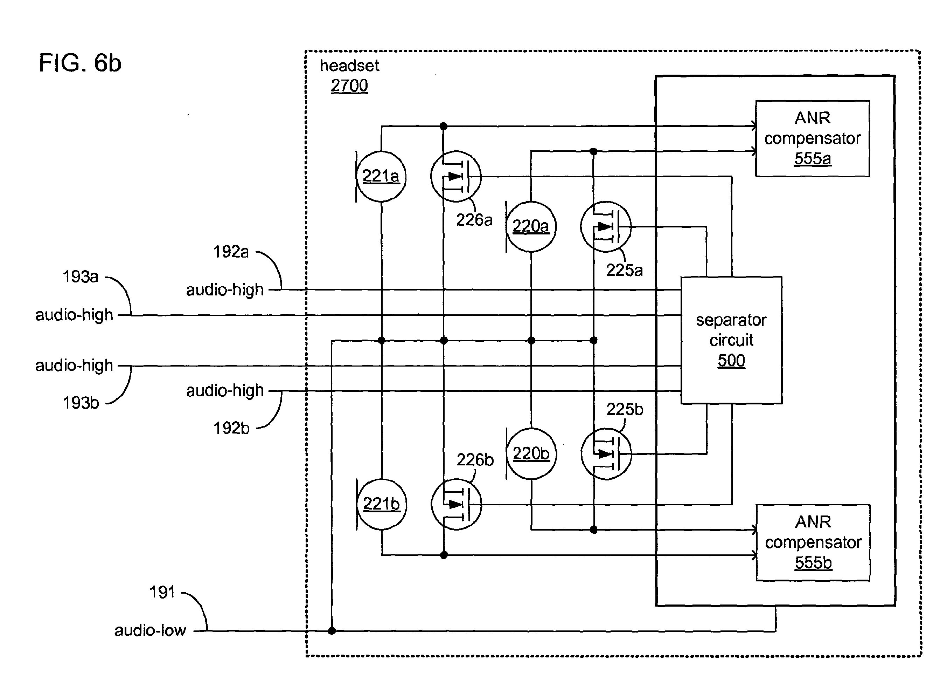

**Figure 6a** is a perspective view of another headset 2700, and **Figure 6b** is a block diagram of the headset 2700. The headset 2700 combines the two-way communications feature of the headset 2500 with a provision of both feedback-based and feed-forward based ANR (in contrast to the pair of ANR headphones 2600 providing only one or the other form of ANR). Therefore, the headset 2700 incorporates the earpieces 410, the headband 412, the microphone casing 415 and the microphone boom 417 of both of the headset 2500 and the pair of ANR headphones 2600. The headset 2700 also incorporates the microphones 220, 220a and 220b, along with the acoustic drivers 1000a and 1000b. Further, the headset 2700 additionally incorporates a pair of microphones 221a and 221b (one each separately incorporated into each one of a pair of earpieces 410) to serve as the microphones detecting noise sounds for providing feedforward-based ANR, while the microphones 220a and 200b detect noise sounds for providing feedback-based ANR, and the microphone 220 detects voice sounds in support of two-way communications.

Turning to Figure 6b, only a portion of the electrical architecture of the headset 2700 (including only a portion of the ANR circuit 550, an audio circuit that manipulates detected noise sounds to produce anti-noise sounds) is depicted for sake of clarity of discussion, and this depicted portion is associated largely with the provision of ANR, and not the supporting of two-way voice communications. It is to be understood that the manner in which two-way communications is supported by the headset 2700 is much the same as was earlier described regarding the headset 2500. As depicted, the headset 2700 incorporates the ANR compensators 555a and 555b also found in the pair of ANR headphones 2600, but in the ANR headset 2700, the ANR compensators 555a and 555b are coupled to the microphones 221a and 221b, respectively, in addition to being coupled to the microphones 220a and 220b, respectively, as part of supporting both feedforward-based and feedback-based ANR. Also as depicted, the headset 2700 incorporates the separator circuit 500 and the MOSFETs 225a and 225b of the pair of ANR headphones 2600, but in the ANR headset 2700, the separator circuit 500 is additionally coupled to a pair of MOSFETs 226a and 226b. Further, the gates of each of these four MOSFETs is separately coupled to the separator circuit 500, whereas the gates of the pair of MOSFETs 225a and 225b of the pair of ANR headphones 2600 were coupled together in a single coupling to the separator circuit 500, thereby necessitating their being operated together.

Thus, a significant difference between the headset 2700 from the pair of ANR headphones 2600, among other significant differences, is the ability to separately operate each of the MOSFETs 225a, 225b, 226a and 226b to separately bypass each of the microphones 220a, 220b, 221a and 221b, respectively, to enable separate tests to be performed of the functionality of each of the acoustic drivers 1000a and 1000b (not specifically shown in Figure 6b), including the manner in which the acoustic drivers 1000a and 1000b separately interact with different ones of these microphones and/or with corresponding ones of the ANR compensators 555a and 555b. To enable this separate bypassing of these microphones, the headset 2700 provides a pair of sets of audio signal conductors by which the analog audio signals may be provided to the headset 2700, namely one set that includes the pair of audio-high conductors 192a-b and the audio-low conductor 191 also found in the pair of ANR headphones 2600, and another pair of audio-high conductors 193a-b that also employ the audio-low conductor 191 as a return current path. A one-to-one correspondence of each of the audio-high conductors 192a, 192b, 193a and 193b is defined by the separator circuit 500, such that the provision of a relatively high DC bias voltage provided on any one of these four audio signal conductors causes the separator circuit 500 to drive a corresponding one of the MOSFETs 225a, 225b, 226a and 226b to bypass a corresponding one of the microphones 220a, 220b, 221a and 221b.

Although not specifically depicted in Figure 6b, the portion of the electrical architecture of the headset 2700 involved in driving the acoustic drivers 1000a and 1000b with a combination of ANR anti-noise sounds and sounds received from another device to which the headset 2700 may be coupled is substantially similar to the corresponding portion of the electrical architecture of the pair of ANR headphones 2600. Specifically, the electrical architecture of the headset 2700 also incorporates the summing nodes 535a and 535b by which the analog audio signals provided by another device on the audio-high conductors 192a and 192b are combined with the anti-noise sounds derived by the ANR compensators 555a and 555b, respectively, and analog signal representing the combined sounds of the summing nodes 535a and 535b are provided to the acoustic drivers 1000a and 1000b, respectively. However, the summing nodes 535a and 535b in the electrical architecture of the headset 2700 additionally combine analog audio signals provided on the audio-high conductors 193a and 193b, respectively, with the other analog audio signals that are combined and routed to the acoustic drivers 1000a and 1000b, respectively.

Thus, both the pair of ANR headphones 2600 and the headset 2700 provide the ability to disable the introduction of sounds detected by one or more microphones to enable other portions of their electrical architectures to be tested in isolation with sounds provided on audio signal conductors. By way of example, in the headset 2700, with one or more of the microphones 220a-b and 221a-b bypassed through the provision of a relatively high DC bias voltage on a subset of the audio signal conductors 192a-b and 193a-b, others of the audio signal conductors 192a-b and 193a-b may be employed to provide analog audio signals representing test sounds to be provided to the acoustic drivers 1000a and 1000b to test the operation of at least the acoustic drivers 1000a and/or 1000b. With the results of those tests, a relatively high DC bias voltage may be provided on an appropriate one of the audio signal conductors 192a-b and 193a-b to gain access to and tune one or more gain control components to compensate for variances in one or both of the acoustic drivers 1000a and 1000b.

In this way, either of the pair of ANR headphones 2600 or the headset 2700 can be operated in a "test mode" that is something of a hybrid of the earlier-discussed audio mode and data mode. In this test mode, one subset of the audio signal conductors is provided with a relatively high DC bias voltage to cause the separator circuit 500 to disable one or more of the microphones (through operation of one or more of the MOSFETs) and/or to enable an exchange of a piece of digitally-encoded data through that one subset, while another subset of the audio signal conductors is provided with a relatively low DC bias voltage to cause the separator circuit 500 to also enable an analog audio signal representing a test sound to pass through the separator circuit 500 as part of performing a test. Further a relatively high DC bias voltage on one of the audio signal conductors causing the separator circuit 500 to disable one or more of the microphones may also serve to cause the separator circuit to enable a transfer of digital data entailing use of the very same one of the audio signal conductors. With such flexibility in the use of a relatively high DC bias voltage, exchanges of digitally-encoded data to set a resistance of a digital potentiometer, the gain of an amplifier or to set some other parameter of some other form of gain control component could be done simultaneously with the conduct of a test involving the provision of an analog audio signal, and indeed, the setting provided to a gain control component may be part of performing the test and/or part of using a result of the test as the test occurs. Thus, the separator circuit 500 of the pair of ANR headphones 2600 and the headset 2700 must be sophisticated enough to allow different subsets of audio signal conductors to be used in different ways, simultaneously. It must also be noted that since there is only one of the audio-low conductor 191 available to serve as a ground conductor, the audio-low conductor may be part of more than one of these subsets such that it serves as a current return path for both an exchange of digital data and a conveying of an analog audio signal occurring simultaneously on different ones of the audio-high conductors 192a, 192b, 193a and/or 193b.

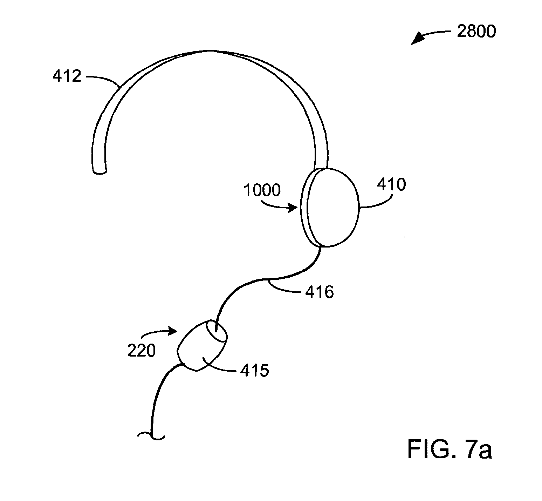

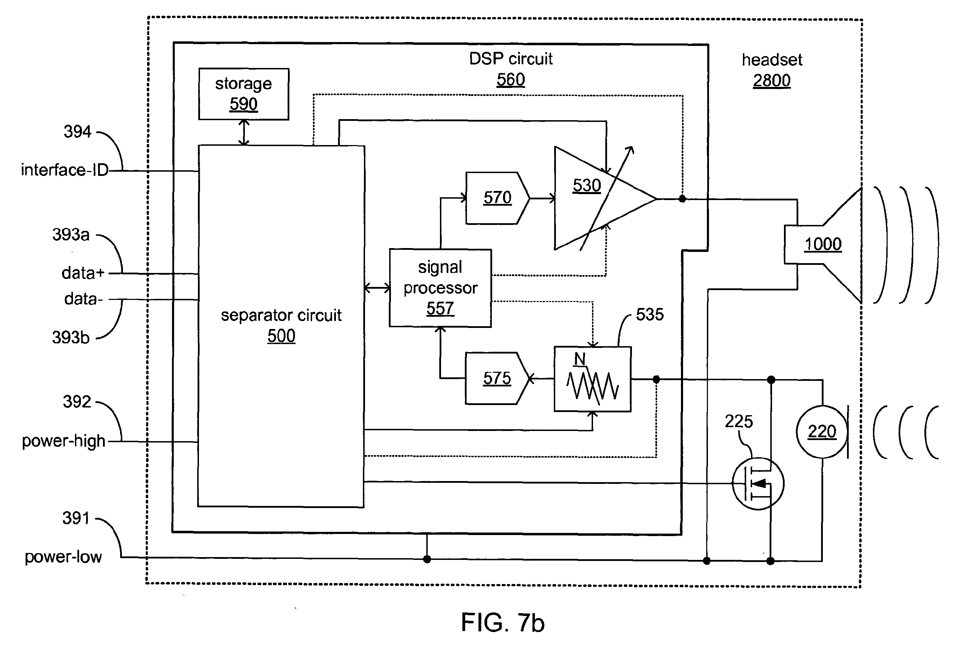

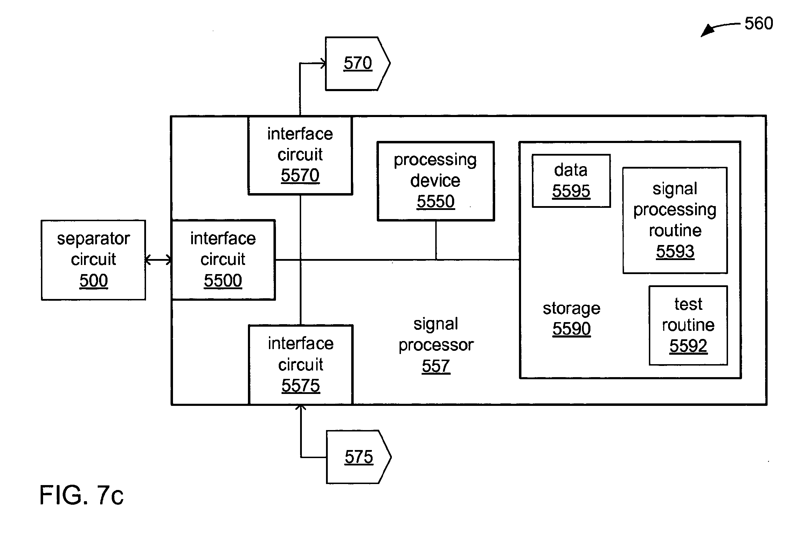

**Figure 7a** is a perspective view of a two-way communications headset 2800, **Figure 7b** is a block diagram of the headset 2800, and **Figure 7c** is a block diagram of a signal processor of the headset 2800. Regarding its physical configuration, the headset 2800 somewhat resembles the headsets 2500 and 2700, incorporating an earpiece 410 within which is positioned the acoustic driver 1000, the headband 412 to provide a mechanism by which the earpiece 410 is maintained in a desired location relative to a user's ear, and the microphone casing 415 within which is positioned the microphone 220. However, unlike either of the headsets 2500 and 2700, the headset 2800 incorporates only one of the earpieces 410 (rather than a pair), and incorporates a cable 416 coupling the microphone casing 415 to one of the earpieces 410 (rather than a microphone boom).

In some variants of the headset 2800, an analog audio signal representing sound to be acoustically output by the acoustic driver 1000 is received through a pair of audio signal conductors, and a different analog audio signal representing a different sound that is detected by the microphone 220 is output through a different pair of audio signal conductors, in a manner not unlike what was previously described with regard to each of the headsets 2500 and 2700 to avoid ground loops. Thus, the headset 2800 could have an electrical architecture somewhat like what is depicted in Figure 4b. Still other configurations of analog conductors will occur to those skilled in the art, including a variant in which there is a common ground conductor employed for both the acoustic driver 1000 and the microphone 220.

However, as will now be described in greater detail, other variants of the headset 2800 send and receive digital data representing sounds to be acoustically output by the acoustic driver 1000 and representing sounds detected by the microphone 220. Thus, turning to a possible electrical architecture of the headset 2800 depicted in Figure 7b, the headset 2800 incorporates the microphone 220, a MOSFET 225, a DSP circuit 560, and the acoustic driver 1000. In turn, the DSP circuit 560 incorporates a variant of the separator circuit 500, an amplifier 530, the digital potentiometer 535, a signal processor 557, an digital-to-analog converter 570, an analog-to-digital converter 575, and perhaps the storage 590 (although the functions of the storage 590 may be performed by a storage of the signal processor 557, as will be explained). In turn, the signal processor 557 incorporates a interface circuit 5500, a processing device 5550, an interface circuit 5570, an interface circuit 5575, and a storage 5590. Within the storage 5590 is stored a test routine 5592, a signal processing routine 5593, and a data 5595.

A power-low conductor 391 is coupled to each of the microphone 220, the MOSFET 225, the DSP circuit 560, and the acoustic driver 1000. A power-high conductor 392 is coupled to at least the separator circuit 500 of the DSP circuit 560, and cooperates with the power-low conductor 391 to provide a pair of conductors by which the headset 2800 may be supplied with electric power from another device (not shown). Also, a data+ conductor 393a and a data- conductor 393b, cooperating as a differential pair enabling the transfer of digital signals representing at least digital data via differential signaling, are coupled to the separator circuit 500. The power-high conductor 391, power-low conductor 392, data+ conductor 393a and data- conductor 393b cooperate to form a set of audio conductors that implement a digital serial interface by which sounds in the form of digital data are transferred to and from the headset 2800 at times when the headset 2800 is coupled via these conductors to another device (not shown).

The digital serial bus implemented by these audio conductors 391, 392, 393a and 393b may conform to any of a number of possible known industry-accepted digital serial buses, including and not limited to, a variant of one of Ethernet (IEEE-802.3) promulgated by the Institute of Electrical and Electronics Engineers (IEEE) of Washington, DC; Universal Scrial Bus (USB) promulgated by the USB Implementers Forum, Inc. of Portland OR; and I2C. Where Ethernet is implemented by these audio conductors 391, 392, 393a and 393b, a variant supporting only 10Mb/s (or less) using only a single differential pair may be implemented that incorporates a variant of "power over Ethernet" (POE). As will be familiar to those skilled in the art of implementing various known digital serial buses, it is not uncommon for additional conductors to be employed to enable characteristics of at least some of the components employed in implementing a given digital serial bus to be identified. Often, connectors carried by a devices having a given digital serial interface carry one or more contacts that may be coupled to high or low voltage levels via resistors or other components incorporated into cables or other components employed in coupling devices via a given digital serial bus. Where USB is implemented, these audio conductors 391, 392, 393a and 393b may be carried through "mini-USB" or "micro-USB" connectors incorporating a shell conductor and perhaps an interface-ID conductor 394 by which at least whether an "A" connector or a "B" connector of a USB-compliant cable is coupled to headset 2800. Details of the significance and purpose of distinguishing between "A" and "B" connectors arc not within the scope of what is disclosed herein, and will not be described. For purposes of this disclosure, it is sufficient to explain that, depending on which of these connectors of a USB-compliant cable is coupled to the headset 2800, the interface-ID conductor 394 may be coupled to the power-low conductor 391, or may not be coupled to anything.

Within the DSP circuit 560, the separator circuit 500 is coupled via at least a digital bus to the signal processor 557, and the signal processor 557 is, in turn, coupled via at least digital buses to each of the digital-to-analog converter 570 and the analog-to-digital converter 575 to enable the exchange of digital data representing sounds among them. The analog output of the digital-to-analog converter 570 is coupled to the input of the amplifier 530, which is also coupled to the separator circuit 500 to receive signals controlling the gain provided by the amplifier 530. The output of the amplifier 530 is then coupled to the acoustic driver 1000. The analog input of the analog-to-digital converter 575 is coupled to the digital potentiometer 535, which is also coupled to the separator circuit 500 to receive signals controlling the resistance imposed by the digital potentiometer 535. Through the digital potentiometer 535, and subject to whatever resistance is imposed by it, the input of the analog-to-digital converter 575 is coupled to the microphone 220 and the MOSFET 225. The gate of the MOSFET 225 is directly coupled to the separator circuit 500, enabling the bypassing of the microphone 220 in a manner similar to what has already been previously described, to be carried out under the control of the separator circuit 500. Further, in implementations of the headset 2800 in which the storage 590 is present, the storage 590 is coupled to the separator circuit 500 to at least enable its contents to be accessed via one or more of the audio conductors 391, 392, 393a and 393b by another device (not shown) to which the headset 2800 is coupled, and perhaps also accessed by the signal processor 557, as will be explained.

Within signal processor 557, the processing device 5550 is coupled to each of the interface circuits 5500, 5570 and 5575, and is coupled to the storage 5590. Through the interface circuit 5500, digital data representing both sounds to be acoustically output by the acoustic driver 1000 and sounds detected by the microphone 220 is exchanged between the signal processor 557 and the separator circuit 500. Through the interface circuit 5570, digital data representing sounds to be acoustically output by the acoustic driver 1000 are provided to the digital input of the digital-to-analog converter 570 to be converted to an analog signal representing those sounds to be acoustically output, which are in turn (referring back to Figure 7b), provided to the input of the amplifier 530 to be amplified and provided in amplified form to the acoustic driver 1000. Through the interface circuit 5575, digital data representing sounds detected by the microphone 220 are received from the analog-to-digital converter 575, having been converted from an analog signal representing those detected sounds received from the microphone 220 through the digital potentiometer 535 with whatever resistance imposed on that analog signal by the digital potentiometer 535.

During normal operation (i.e., during its "audio mode"), the headset 2800 is coupled by its audio conductors (namely at least the power-low conductor 391, the power-high conductor 392, the data+ conductor 393a and the data- conductor 393b) to a personal computer, a digital network based telephone or a video game system (not shown) through which a user of the headset 2800 engages in two-way voice communications with another person and/or engages in controlling a device via voice commands. In the audio mode, digital data representing sounds to be acoustically output by the acoustic driver 1000 are received from whatever device by the separator circuit 500, provided to the signal processor 557, and then provided to the digital-to-analog converter 570 where digital data is converted to an analog signal representing those sounds, which is provided to the amplifier 530 where the analog signal is amplified, and the amplified form of that analog signal is provided to the acoustic driver 1000 where the sounds it represents are acoustically output. Further, in the audio mode, an analog audio signal representing sounds detected by the microphone 220 are provided to the digital potentiometer 535 where it may be attenuated via the imposition of a resistance, then the attenuated form of that analog signal is provided to the analog-to-digital converter 575 where it is converted into digital data representing those sounds, which is provided to the signal processor 557, then provided to the separator circuit 500 where it is output to whatever device.

Still further, in audio mode, the processing device 5550 accesses the signal processing routine 5593, executes a sequence of instructions of that routine, and is caused by that routine to receive the digital data representing sounds to be acoustically output by the acoustic driver 1000 from the separator circuit 500 via the interface 5500 and to output digital data to the digital-to-analog converter 570 representing those sounds via the interface circuit 5570. At the same time, the processing device 5550 is also caused to receive the digital data representing sounds detected by the microphone 220 from the analog-to-digital converter 575 via the interface 5575 and to output digital data to the separator circuit 500 representing those sounds via the interface circuit 5500. While the processing device 5550 is performing these data transfer operations, during the audio mode, the processing device 5550 may perform one or more noise reduction, tone balancing, and/or other signal processing operations on either or both of the sounds to be acoustically output by the acoustic driver 1000 and the sounds detected by the microphone 220. Such operations may limit the range of frequencies of one or both of these sounds, may change the sampling rate, change a form of encoding, compress digital data and/or decompress digital data.

During testing of the headset 2800 (i.e., during a "test mode"), the headset 2800 is coupled to a test device (not shown) via the audio conductors 391, 392, 393a and 393b (and perhaps, also 394, as will be explained) to receive digitally-encoded and/or other signals configuring the headset 2800 for various tests, some of which are intended to isolate different components of the headset 2800 for testing and/or some of which are intended to characterize the performance of various components of the headset 2800 in situ. Using the digital serial bus already implemented by at least the audio conductors 391, 392, 393a and 393b, various commands (and/or other digitally-encoded indications) may be transmitted to the headset 2800 to cause the separator circuit 500 to enable direct access to and direct operation of the MOSFET 225, the amplifier 530, the digital potentiometer 535, the storage 590 and/or the storage 5590 by a test device. With such direct access and direct operation enabled, such a test device may isolate one or more of the microphone 220, the amplifier 530, the digital potentiometer 535, the digital-to-analog converter 570, the analog-to-digital converter 575 and the acoustic driver 1000 to perform tests without the results of those tests being influenced by other components.

Similarly, using the digital serial bus already implemented by at least the audio conductors 391, 392, 393a and 393b, various commands (and/or other digitally-encoded indications) may be transmitted to the headset 2800 to cause the processing device 5550 to execute a sequence of instructions of the test routine 5592, instead of a sequence of instructions of the signal processing routine 5593, to cause the processing device 5550 to cooperate in carrying out such tests. By way of example, a portion of one or both of the storage 590 (if present) and the storage 5590 (e.g., the data 5595) may be written with one or more bits serving as a signal to the processing device 5550 to execute sequences of instructions of one or the other of the test routine 5592 and the signal processing routine 5593. It may be that the processing device 5550 is simply caused to cease performing various signal processing functions on digital data representing sounds so as to remove any influences that such digital processing functions may have on the results of tests of the microphone 220, the acoustic driver 1000 and/or other components. It may be that the processing device 5550 is caused to actually perform one or more of the tests, itself, (e.g., generate test tones, etc.) and to then relay the results to whatever test device to which the headset 2800 is coupled.

Part of such tests may be tests to characterize the behavior of one or both of the microphone 220 and the acoustic driver 1000 in situ, i.e., as installed as part of the headset 2800, rather than as components that have as yet to be incorporated into a device. As those skilled in the art of the acoustic behavior of electro-acoustic transducers will readily recognize, it is not uncommon for an acoustic driver or a microphone to exhibit a change in behavior from when they have been tested and characterized as individual components to when they've been built into a device (e.g., the headset 2800). Thus, while one or both of the microphone 220 and the acoustic driver 1000 may have been previously tested such that their characteristics are known, and perhaps also stored within the storage 590 (or elsewhere within the headset 2800 and/or elsewhere within one or both of the microphone 220 and the acoustic driver 1000, themselves), knowledge of such characteristics may be insufficient in tuning aspects of some form of processing performed on sound either to be acoustically output or being detected. Thus, at the time of manufacture, at a time of being repaired, and/or on other occasions, the headset 2800 may be placed within a test device (not shown) that places the headset 2800 in a test mode in which the acoustic driver 1000 is caused to output one or more test sounds that are detected by a microphone of the test device, and/or places the headset 2800 in a test mode in which one or more test sounds are output to the microphone 220 by an acoustic driver of the test device. Then, the test device may access a portion of the storage 590 and/or the storage 5590 (e.g., the data 5595) to write digital data therein indicating characteristics of one or both of the microphone 220 and the acoustic driver 1000 derived from these tests. And, during audio mode, the processing device 5550 may access one or both of the storages 590 and 5590 to retrieve this digital data and employ it to adjust the performance of one or more signal processing operations to compensate for those characteristics written therein.

By way of example, a test device (not shown) coupled to the headset 2800 via the audio conductors 391, 392, 393a and 393b may transmit commands to the separator circuit 500 to obtain access to the signal processor 557 to gain access enough to the storage 5590 to write a bit into a portion of the storage 5590 (e.g., the data 5595) that, when accessed by the processing device 5550, causes the processing device 5550 to retrieve and execute a sequence of instructions of the test routine 5592. Upon execution of this sequence of instructions, the test routine 5592 causes the processing device 5550 to cease applying various signal processing algorithms normally used on digital data representing sounds in an audio mode to reduce noise sounds in two-way audio communications. Instead, the test routine 5592 causes the processing device 5550 to more simply convey digital data among the interfaces 5500, 5570 and 5575 as needed to enable the performance of a first test in which a sound of a specific frequency is caused to be output by the acoustic driver 1000 and detected by a microphone of the test device, and to enable the performance of a second test in which a sound of a specific frequency that is output by an acoustic driver of the test device is detected by the microphone 220. In both tests, the specific frequencies are chosen as a result of being known frequencies at which stable operation of the acoustic driver 1000 and the microphone 220 can be reasonably assured, and at which sensitivity measurements (and perhaps, other characteristics) may be taken that can be deemed to be applicable across a relatively wide range of frequencies. The test device then accesses a portion of one or both of the storages 590 and 5590 (e.g., the data 5595) to write digitally-encoded data therein that is indicative of the sensitivity characteristics (and perhaps, other characteristics) of one or both of the microphone 220 and the acoustic driver 1000 that were derived from those tests. The test device then again writes a bit into the same portion of the storage 5590 that, when accessed by the processing device 5550, causes the processing device 5550 to retrieve and execute a sequence of instructions of the signal processing routine 5593 to enable an audio mode of the headset 2800.

Unfortunately, there may be implementations of the headset 2800 in which characteristics of the digital serial interface implemented by the audio conductors 391, 392, 393a and 393b render the digital serial interface insufficient to perform such testing. This can arise from various aspects in which sounds are represented by digital data for a given industry-accepted form of digital serial bus. It may be that a given form of digital serial bus limits the sample rate and/or bit rate to too restrictive a level, or an audio compression algorithm that is normally used on a given form of digital serial bus is too lossy, or that transitions in tones sought to be used in testing are sufficiently great in a sufficiently short period of time that slope overload distortion occurs. In one approach to countering such limitations in a given form of digital serial bus, a voltage level other than one associated with normal operation of a given digital serial bus may be applied to one of the audio conductors 391, 392, 393a, 393b or 394 (if present) to trigger an alternate mode of operation in the separator circuit 500 such that one or more of these audio conductors is employed in conveying signals representing audio in a manner that is not normally associated with normal operation of that given digital serial bus. By way of example, where the audio conductors 391, 392, 393a and 393b are employed to implement USB, the power-high conductor 392 may be driven with a voltage level other than the normal 5VDC (relative to the power-low conductor 391, e.g., 12VDC) to trigger a different protocol, data encoding and/or data transfer speed for digital data conveyed via the data+ conductor 393a and the data-conductor 393b.

By way of another example, where the audio conductors 391, 392, 393a, 393b and 394 a employed to implement USB with a "mini-USB" or "micro-USB" connector providing the connector identifying function (such that there is a need for the functionality of the interface-ID conductor 394), an alternate voltage level driven onto the power-high conductor 392 (e.g., 12VDC relative to the power-low conductor 391) may trigger an alternate mode of operation in the separator circuit 500 by which analog-to-digital and/or digital-to-analog conversions that normally take place within the headset 2800 during an audio mode arc bypassed, and more direct access to the acoustic driver 1000 and/or the microphone 220 is provided. More specifically, as shown with dotted lines in Figure 7b, the separator circuit 500 may be directly coupled to one or both of the acoustic driver 1000 and the microphone 220, and when placed in such an alternate mode of operation, the separator circuit 500 may enable analog signals representing sounds to be more directly provided to the acoustic driver 1000 or more directly taken from the microphone 220 through the separator circuit 500 and via the interface-ID conductor 394.

By way of still another example, either a voltage-based trigger or a digitally-encoded command (or other indication) provided to the headset 2800 via normal operation of whatever form of digital serial bus is implemented by the audio conductors 391, 392, 393a and 393b may cause one or the other of the separator circuit 500 or the processing device 5550 to operate the amplifier 530 and the digital potentiometer 535 in ways to counter one or more difficulties in the manner in which sound is normally represented as digital data during normal operation of whatever form of digital serial bus. More specifically, in instances where the limitations are such that slope overload distortion is encountered, the digital potentiometer 535 may be set to more severely attenuate the analog signal representing sounds detected by the microphone 220 than normally done during an audio mode to more severely limit the level of the audio signal before it is converted to digital data by the analog-to-digital converter 575 as a way to narrow the range of digitally-encoded values used to represent those sounds. Correspondingly, the amplifier 530 may be set to provide a far greater gain in amplitude than normally used during an audio mode to also enable a narrower range of digitally-encoded values to be employed in digital data representing a test tone to be amplified by the amplifier 530 for being acoustically output by the acoustic driver 1000. It may be that the signal processor 557 is directly coupled to each of the amplifier 530 and the digital potentiometer 535, thereby enabling the processing device 5550 to alter the settings of the amplifier 530 and the digital potentiometer 535 in such ways as a result of executing a sequence of instructions of the test routine 5592.

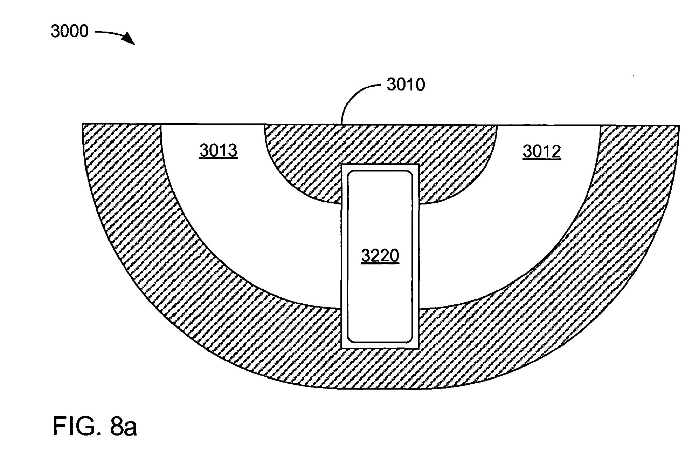

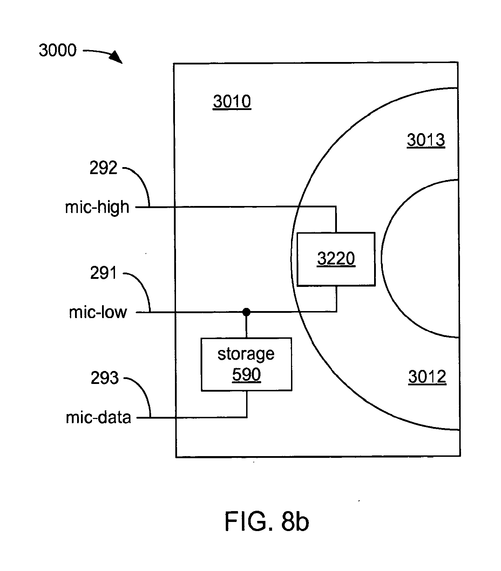

**Figure 8a** is a cross-sectional view of a microphone assembly 3000, and **Figure 8b** is a block diagram of a possible electrical architecture of the microphone assembly 3000. The microphone assembly 3000 incorporates a dual-ported casing 3010 having a pair of curving ports 3012 and 3013 leading to a common location within the casing 3010 at which a velocity microphone 3220 is disposed in a manner in which its diaphragm is interposed between the ports 3012 and 3013 such that one side of its diaphragm faces towards the port 3012 and the other side faces towards the port 3013. It should be noted that still other variants and types of microphones or microphone elements other than the velocity microphone may be so disposed within the casing 3010 in place of what is depicted as long as the casing 3010 is configured in a manner to place their diaphragm in a similar configuration between the ports 3012 and 3013 as just described for the velocity microphone 3220. In ways that would require an acoustics explanation that goes beyond the scope of this present patent application to fully disclose, this dual-ported structure of the casing 3010 employs a physical configuration of shapes and dimensions that tend to enable whatever microphone is placed therein to more easily detect human voice sounds while tending to reject non-voice sounds. Alternatively and/or additionally, it is intended that the casing 3010 be disposed on a surface of whatever device into which it is incorporated to enable the directional characteristics of the velocity microphone 3220 disposed within it to be employed to tend to detect sounds emanating from a direction coinciding with the mouth of a user to more easily detect human voice sounds uttered by that user while tending to reject sounds emanating from other directions.

Despite these and other undisclosed advantages of the microphone assembly 3000, an issue is raised through the simple fact that the microphone assembly 3000 is a physical assemblage of at least the casing 3010 and whatever microphone is disposed therein. As those familiar with acoustics, especially the acoustics of ports and other openings by which a microphone may be given access to sounds, even small variances in the dimensions and/or shape of such a structure as the ports 3012 and 3013 can measurably affect what a microphone disposed there will detect and with what sensitivity. Further, variances in the placement of a microphone of whatever variety therein can also have a measurable affect. Such affects can rapidly compound whatever measurable affects may be caused by variances in the manufacturing of microphones, themselves, potentially leading to a combined magnitude of an adverse affect that is sufficient to cause distortions in detected sounds and defeat reliance on detected sounds as an input for noise reduction or other algorithms performed with the intention of improving sound quality.

Thus, even before the microphone assembly 3000 is incorporated into a device, the magnitude of the affect of the combination of the variances that may exist in each of the components making up the assembly 3000, as well as variances arising from how well those components are put together, may be great enough that it may be deemed desirable to characterize the behavior of the microphone assembly 3000 as a whole. As can be seen in Figure 8b, in one possible electrical architecture of the microphone assembly 3000, a form of the storage 590 may be directly incorporated into the microphone assembly 3000 to store an indication of characteristics derived from the testing of the entirety of the microphone assembly 3000 as a whole. Still, in one possible variation of this electrical architecture, the velocity microphone 3220 (or whatever microphone is employed, especially if it is a variant of the electret microphone 2000 introduced earlier) may incorporate its own storage device that stores an indication of its own characteristics. Depending on whatever signal processing is performed by whatever device into which the microphone assembly 3000 is incorporated, it may be desirable for one or both of the assembly 3000 and the velocity microphone 3220 to have storage devices in which indications of their characteristics are maintained. Such indications of their characteristics could then be readily available for being read by a processing component of whatever device into which the microphone assembly 3000 is incorporated in order to in some way compensate for whatever ways in which those characteristics may deviate from a desired ideal set of characteristics.

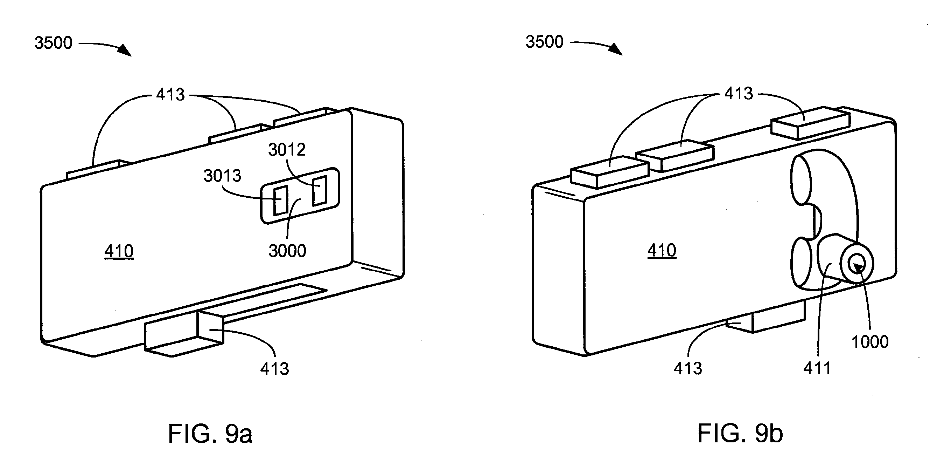

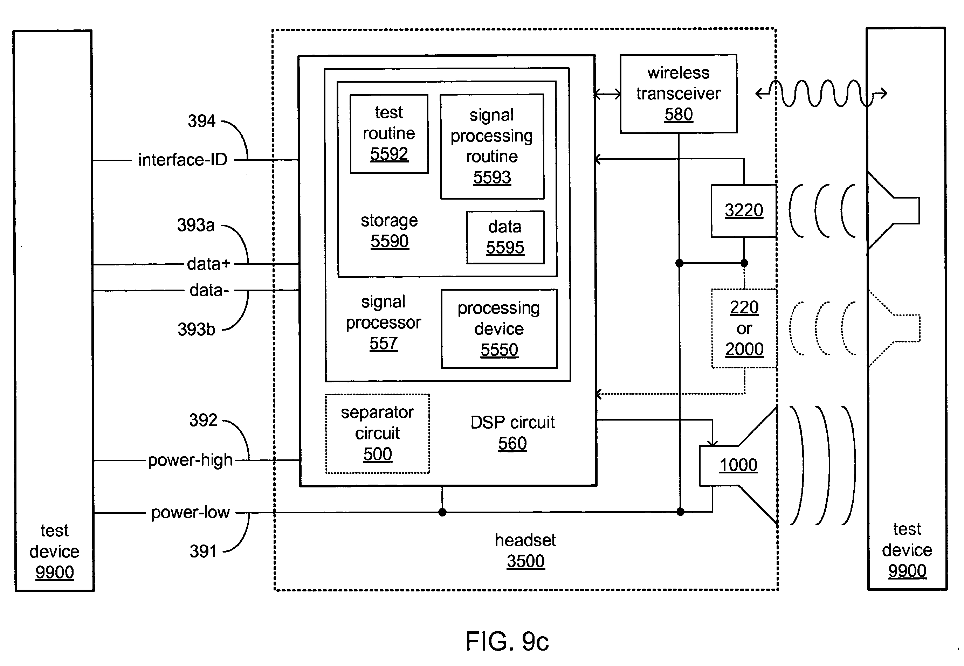

**Figures 9a and 9b** are perspective views of a two-way wireless communications headset 3500 (also known to be referred to as a "wireless earset"), and **Figure 9c** is a block diagram of the headset 3500. Regarding its physical configuration, in a manner somewhat akin to the headset 2800, the headset 3500 incorporates an earpiece 410 within which is positioned the acoustic driver 1000. However, unlike any of the previously discussed headsets, a microphone for purposes of two-way communications is incorporated into the same casing as the acoustic driver 1000, the microphone is actually part of the microphone assembly 3000 (rather than just a bare microphone), and the earpiece 410 incorporates an ear coupling 411 that engages an ear of a user in such a manner as to keep the headset 3500 in place adjacent that ear without the use of the headband 412 (or similar mechanism). Further, the headset 3500 incorporates a set of manually-operable controls 413 that likely (but not necessarily) include one or more of a power switch, a volume control, a mute control, a call answering control and a call initiating control.

Turning to Figure 9c, the headset 3500 is depicted as having an electrical architecture that is similar in many ways to what was depicted in Figures 7b and 7c for the headset 2800. Thus, the depiction of this possible electrical architecture of the headset 3500 that is depicted in Figure 9c is somewhat simplified in comparison to the depiction provided in Figures 7b and 7c for purposes of minimizing unnecessary repetition and improving clarity for the sake of understanding. It is also desired in this depiction in Figure 9c to place more emphasis on the ways in which this possible architecture for the headset 3500 differs from that of the headset 2800. Thus, as can be seen in Figure 9c and not unlike the headset 2800, the headset 3500 incorporates at least the microphone assembly 3000, the DSP circuit 560, and the acoustic driver 1000. However, the headset 3500 also incorporates a wireless transceiver 580, and may further incorporate an additional microphone 220 or 2000 for purposes of cooperating with the DSP circuit 560 to provide ANR. In turn, the DSP circuit 560 incorporates at least the signal processor 557 (which likely incorporates what is depicted in Figure 7c), and may further incorporate a variant of the separator circuit 500.

As depicted, the headset 3500 is able to be coupled to other devices via a digital serial bus implemented by the audio conductors 391, 392, 393a and 393b (and perhaps also 394) in much the same manner as the headset 2800. However, it is envisioned that the headset 3500 is normally to be coupled to another device via its wireless transceiver 580 forming a point-to-point or other form of radio frequency (RF) or infrared (IR) wireless coupling with the other device, and it is envisioned that being electrically coupled to another device via audio conductors will occur only infrequently, including for purposes of testing the headset 3500. The wireless linkage formed by the headset 3500 with another device via the wireless transceiver 580 may conform to any of a number of possible known industry-accepted wireless communications specifications, including and not limited to, IEEE 802.11a, 802.11b or 802.11g promulgated by the IEEE; Bluetooth promulgated by the Bluetooth Special Interest Group of Bellevue, WA; or ZigBee promulgated by the ZigBee Alliance of San Ramon, CA.

During normal operation (i.e., during its "audio mode"), the headset 3500 is wirelessly coupled to a cellular telephone, a personal data assistant (PDA), a solid state music player (not shown), etc., through which a user of the headset 2800 engages in two-way voice communications with another person, engages in listening to an audio recording and/or engages in controlling a device via voice commands. In the audio mode, digital data representing sounds to be acoustically output by the acoustic driver 1000 are received by the wireless transceiver 580 from whatever device, and are provided to the signal processor 557 (within the DSP circuit 560) where various forms of signal processing may be performed on that digital data before it is ultimately converted to an analog signal that is amplified and provided to the acoustic driver 1000 to acoustically output those sounds, as has been previously described in reference to the headset 2800. Further, in the audio mode, an analog audio signal representing sounds detected by the velocity microphone 3220 incorporated into the microphone assembly 3000 is converted into digital data (as has been previously described in reference to the headset 2800) representing those sounds that is provided to the signal processor 557 where various forms of signal processing may be performed on that digital data before it is provided to the wireless transceiver 580 to be transmitted to whatever device. Again, the processing device 5550 accesses the signal processing routine 5593 and executes a sequence of instructions of that routine that cause the processing device 5550 to perform data transfer operations and one or more noise reduction, tone balancing, automatic gain control and/or other signal processing operations on either or both of the sounds to be acoustically output by the acoustic driver 1000 and the sounds detected by the microphone 220. Such operations may limit the range of frequencies of one or both of these sounds, may change the sampling rate, change a form of encoding, compress digital data and/or decompress digital data.

During testing of the headset 3500 (i.e., during a "test mode"), the headset 3500 is coupled to a test device 9900 via one or more of the audio conductors 391 and 392, the audio conductors 393a and 393b (perhaps, also 394), and a wireless linkage between the wireless transceiver 580 and a corresponding wireless transceiver (not shown) of the test device 9900. It is deemed preferable, though not necessary, that the headset 3500 at least be coupled by the power-low conductor 391 and the power-high conductor 392 (of these audio conductors) so as to have power provided to the headset 3500 to avoid drawing on whatever battery or other electrical energy storage device (not shown) is incorporated into the headset 3500 while the headset 3500 is tested (especially where the headset 3500 has just been manufactured such that whatever energy storage device incorporated into it may not have been fully charged, as yet).

It is envisioned as possible to use either or both of the wireless transceiver 580 and the audio conductors 393a-b to convey commands to cause the processing device 5550 to execute a sequence of instructions of the test routine 5592 so as to cause the processing device 5550 to cooperate with the test device 9900 in operating the headset 3500 in a test mode to conduct tests of various ones of its components. Among the envisioned tests is a test to determine one or more characteristics of the acoustic driver 1000 in situ by providing the headset 3500 with digital data representing one or more test sounds to be acoustically output by the acoustic driver 1000 and subsequently detected by a microphone of the test device 9900 for analysis. Also among the envisioned tests is a test to determine one or more characteristics of whatever microphone is disposed within the casing 3010 of the microphone in situ by acoustically outputting via an acoustic driver of the test device 9900 one or more test sounds to be detected by the microphone disposed within the casing 3010, those detected sounds being relayed back to the test device 9900 as digital data representing those detected sounds for analysis.

In a manner very much like what was discussed with regard to the headset 2800, after such tests, the test device 9900 may access a portion of the storage 5590 (e.g., the data 5595) or whatever other storage may be incorporated into the headset 3500 to write digital data therein indicating characteristics of one or both of the microphone disposed within the microphone assembly 3000 and the acoustic driver 1000 derived from these tests. Again, such tests may include a characterization of sensitivity in which one or more test tones at frequencies selected for stability are employed. Again, during an audio mode, the processing device 5550 may access such stored data and employ it to adjust the performance of one or more signal processing operations to compensate for those characteristics written therein.

In each of these tests, the transfers of digital data are envisioned as being carried out either via the audio conductors 393a-b or a wireless linkage between the wireless transceiver 580 of the headset 3000 and a corresponding wireless transceiver of the test device 9900. Again, limitations in the manner in which audio is normally represented in the digital data conveyed via the digital serial bus implemented by the audio conductors 391, 392, 393a and 393b, or in digital data conveyed via a wireless linkage between the transceiver 580 of the headset and the corresponding transceiver of the test device 9900, may impede such tests. Again, the digital serial bus implemented by the audio conductors 391, 392, 393a and 393b (and perhaps, also 394) may be caused to be operated in an alternate manner to enable transfers of digital data representing sounds in a way that overcomes such limitations. Similarly, it is envisioned as possible to operate the wireless transceiver 580 and the corresponding transceiver of the test device 9900 in an alternate manner. However, again, gain levels associated with sounds to be acoustically output by the acoustic driver 1000 and/or with sounds detected by whatever microphone is disposed within the casing 3010 may be altered during a test mode to overcome noise or distortion issues, such as slope overload distortion, granular distortion, or other undesired audio artifacts arising from limits in encoding, bit rate, sampling rate, etc.

Other implementations are within the scope of the following claims.

## Claims

1. An apparatus comprising:
an acoustic driver (1000);
two audio signal conductors (191,192) to enable coupling of the apparatus to a device;
an audio circuit structured to manipulate an analog audio signal representing a sound provided by the device on the two audio signal conductors to derive a derived sound from the sound, and coupled to the acoustic driver to convey a derived analog audio signal representing the derived sound to the acoustic driver; **characterized by**
a separator circuit (500) coupled to the two audio signal conductors and to the audio circuit, and structured to:
employ a first threshold voltage to distinguish between a relatively low DC bias voltage placed across the two audio signal conductors by the device and a first relatively high DC bias voltage placed across the two audio signal conductors by the device;
in response to the relatively low DC bias voltage placed across the two audio signal conductors, allow the analog audio signal to be conveyed through the separator circuit from the two audio signal conductors to the audio circuit; and
in response to the first relatively high DC bias voltage across the two audio signal conductors, cease to allow an analog signal occurring on one of the two audio signal conductors to be conveyed through the separator circuit to the audio circuit.

2. The apparatus of claim 1, further comprising:
a microphone coupled to the audio circuit; and
a MOSFET coupled to the microphone to enable the MOSFET to be operated to bypass the microphone, and having a gate coupled to the separator circuit, wherein the separator circuit is further structured to operate the gate of the MOSFET to cause the MOSFET to bypass the microphone in response to the first relatively high DC bias voltage across the two audio signal conductors.

3. The apparatus of claim 1, further comprising a gain control component operable to control a gain of the audio circuit to compensate for a characteristic of the acoustic driver in response to being accessed and set with a first piece of digitally-encoded data through the two audio signal conductors by the device, wherein:
the first piece of digitally-encoded data represents a setting for the gain control component; and
the separator circuit is further structured to operate at least the two audio signal conductors as a digital serial bus to enable the first piece of digitally-encoded data to be exchanged between the gain control component and the device through the separator circuit and the two audio signal conductors in response to the first relatively high DC bias voltage across the two audio signal conductors to enable the gain control component to be set with the setting.

4. The apparatus of claim 3, wherein the gain control component is a digital potentiometer, and the first piece of digitally-encoded data represents a resistance setting.

5. The apparatus of claim 3, wherein the gain control component is an amplifier, and the first piece of digitally-encoded data represents a gain setting.

6. The apparatus of claim 5, wherein:
the gain control component comprises a plurality of storage locations able to store a second piece of digitally-encoded data concerning a characteristic of one of a microphone of the apparatus and the acoustic driver; and
the separator circuit is further structured to operate at least the two audio signal conductors as a digital serial bus to enable the second piece of digitally-encoded data to be exchanged between the gain control component and the device through the separator circuit and the two audio signal conductors in response to the first relatively high DC bias voltage across the two audio signal conductors to enable the second piece of digitally-encoded data to be retrieved from one of the plurality of storage locations.

7. The apparatus of claim 6, wherein the second piece of digitally-encoded data represents data concerning a characteristic of one of a microphone of the apparatus and the acoustic driver, the characteristic being one of a set consisting of: a measured realizable range of frequencies, a measured resistance across a specific range of frequencies, a measured level of sensitivity across a specific range of frequencies, a serial number enabling a measured characteristic of one of a microphone of the apparatus and the acoustic driver to be obtained from a record, an identity of a manufacturer of one of a microphone of the apparatus and the acoustic driver enabling the manufacturer to be contacted to obtain a measured characteristic of one of a microphone of the apparatus and the acoustic driver, a history of repairs, a history of refurbishment, and a note concerning a suspected mode of failure.

8. The apparatus of claim 1, further comprising a third audio signal conductor coupled to the separator circuit, wherein the separator circuit is further structured to allow another analog signal representing a test sound and provided by the device on the third audio signal conductor and one of the two audio signal conductors to pass through the separator circuit as the separator circuit continues to operate the MOSFET to bypass a microphone of the apparatus to enable a test of the acoustic driver.

9. The apparatus of claim 8, wherein:
the apparatus provides active noise reduction;
the audio circuit comprises an active noise reduction compensator;
the audio circuit is structured to derive anti-noise sounds as the derived sound; and
the test of the acoustic driver tests an operation of the acoustic driver with the active noise reduction compensator.

10. The apparatus of claim 1, further comprising a storage having a plurality of storage locations able to store a first piece of digitally-encoded data and able to provide the first piece of digitally-encoded data in response to being accessed to retrieve the first piece of digitally-encoded data through the two audio signal conductors by the device, wherein:
the first piece of digitally-encoded data concerns a characteristic of one of a microphone of the apparatus and the acoustic driver; and
the separator circuit is further structured to operate at least the two audio signal conductors as a digital serial bus to enable the first piece of digitally-encoded data to be exchanged between the gain control component and the device through the separator circuit and the two audio signal conductors in response to the first relatively high DC bias voltage across the two audio signal conductors to enable the first piece of digitally-encoded data to be retrieved by the device.

11. The apparatus of claim 10, wherein the first piece of digitally-encoded data represents data concerning a characteristic of the microphone, the characteristic being one of a set consisting of: a measured realizable range of frequencies, a measured resistance across a specific range of frequencies, a measured level of sensitivity across a specific range of frequencies, a serial number enabling a measured characteristic of the microphone to be obtained from a record, an identity of a manufacturer of the microphone enabling the manufacturer to be contacted to obtain a measured characteristic of the microphone, a history of repairs, a history of refurbishment, and a note concerning a suspected mode of failure.

12. The apparatus of claim 1, wherein the separator circuit comprises a Zener diode having a threshold voltage that defines the first threshold voltage employed by the separator circuit to distinguish between the relatively low and the first relatively high DC bias voltages.

13. A method comprising applying a voltage across two audio signal conductors of an apparatus to cause the apparatus to cease to operate in an audio mode in which an analog audio signal conveyed through two audio signal conductors of the apparatus from a device coupled to the two audio signal conductors is allowed to pass through a separator circuit of the apparatus to be acoustically output by an acoustic driver of the apparatus, **characterized in that** the voltage is a relatively high DC bias voltage.

14. The method of claim 13, further comprising selecting the two audio signal conductors from among a plurality of at least three or more audio signal conductors of the apparatus to cause the separator circuit to operate a gate of a MOSFET of the apparatus to bypass a microphone of the apparatus to prevent the microphone from providing another analog audio signal representing sounds detected by the microphone to an audio circuit of the apparatus for being acoustically output by the acoustic driver.

15. The method of claim 13, further comprising operating the two audio signal conductors as digital serial bus to write a first piece of digitally-encoded data through the two audio signal conductors and through the separator circuit to a gain control component of the apparatus to set a gain setting of the gain control component.

## Patentansprüche

1. Gerät, umfassend:
- einen akustischen Treiber (1000);
- zwei Audiosignalleiter (191, 192), um das Koppeln des Geräts mit einer Vorrichtung zu ermöglichen;
- eine Audioschaltung, die strukturiert ist, um ein analoges Audiosignal zu manipulieren, das einen Ton darstellt, der von der Vorrichtung auf den beiden Audiosignalleitern bereitgestellt wird, um einen abgeleiteten Ton von dem Ton abzuleiten, und die mit dem akustischen Treiber gekoppelt ist, um ein abgeleitetes analoges Audiosignal, das den abgeleiteten Ton darstellt, an den akustischen Treiber weiterzuleiten;
**gekennzeichnet durch**:
- eine Trennschaltung (500), die mit den beiden Audiosignalleitern und mit der Audioschaltung gekoppelt ist und strukturiert ist zum:
- Verwenden einer ersten Schwellenspannung, um zwischen einer relativ niedrigen DC-Vorspannung, die **durch** die Vorrichtung über die beiden Audiosignalleiter angelegt wird, und einer ersten relativ hohen DC-Vorspannung, die durch die Vorrichtung über die beiden Audiosignalleiter angelegt wird, zu unterscheiden;
- als Reaktion auf die relativ niedrige DC-Vorspannung, die über die beiden Audiosignalleiter angelegt wird, Zulassen, dass das analoge Audiosignal über die Trennschaltung von den beiden Audiosignalleitern an die Audioschaltung weitergeleitet wird; und
- als Reaktion auf die erste relativ hohe DC-Vorspannung über die beiden Audiosignalleiter, Unterbinden, dass ein analoges Signal, das auf einem der beiden Audiosignalleiter vorkommt, über die Trennschaltung an die Audioschaltung weitergeleitet wird.

2. Gerät nach Anspruch 1, ferner umfassend:
- ein Mikrofon, das mit der Audioschaltung gekoppelt ist; und
- einen MOSFET, der mit dem Mikrofon gekoppelt ist, damit der MOSFET betätigt werden kann, um das Mikrofon zu umgehen, und der ein Gatter aufweist, das mit der Trennschaltung gekoppelt ist, wobei die Trennschaltung ferner strukturiert ist, um das Gatter des MOSFET zu betätigen, um zu bewirken, dass der MOSFET als Reaktion auf die erste relativ hohe DC-Vorspannung über die beiden Audiosignalleiter das Mikrofon umgeht.

3. Gerät nach Anspruch 1, ferner umfassend eine Verstärkungsregelungskomponente, die betriebsfähig ist, um eine Verstärkung der Audioschaltung zu regeln, um eine Charakteristik des akustischen Treibers als Reaktion darauf zu kompensieren, dass die Vorrichtung auf diesen zugreift und ihn über die beiden Audiosignalleiter mit einem ersten digital codierten Datenelement einstellt, wobei:
- das erste digital codierte Datenelement eine Einstellung für die Verstärkungsregelungskomponente darstellt; und
- die Trennschaltung ferner strukturiert ist, um mindestens die beiden Audiosignalleiter als einen digitalen seriellen Bus zu betätigen, um zu ermöglichen, dass das erste digital codierte Datenelement, das zwischen der Verstärkungsregelungskomponente und der Vorrichtung über die Trennschaltung und die beiden Audiosignalleiter als Reaktion auf die erste relativ hohe DC-Vorspannung über die beiden Audiosignalleiter ausgetauscht wird, damit die Verstärkungsregelungskomponente mit der Einstellung eingestellt werden kann.

4. Gerät nach Anspruch 3, wobei die Verstärkungsregelungskomponente ein digitales Potentiometer ist und das erste digital codierte Datenelement eine Widerstandseinstellung darstellt.

5. Gerät nach Anspruch 3, wobei die Verstärkungsregelungskomponente ein Verstärker ist und das erste digital codierte Datenelement eine Verstärkungseinstellung darstellt.

6. Gerät nach Anspruch 5, wobei:
- die Verstärkungsregelungskomponente eine Vielzahl von Speicherplätzen umfasst, die in der Lage sind, ein zweites digital codiertes Datenelement zu speichern, das eine Charakteristik betrifft; und
- die Trennschaltung ferner strukturiert ist, um mindestens die beiden Audiosignalleiter als einen digitalen seriellen Bus zu betätigen, damit das zweite digital codierte Datenelement zwischen der Verstärkungsregelungskomponente und der Vorrichtung über die Trennschaltung und die beiden Audiosignalleiter als Reaktion auf die erste relativ hohe DC-Vorspannung über die beiden Audiosignalleiter ausgetauscht werden kann, damit das zweite digital codierte Datenelement aus einem der Vielzahl von Speicherplätzen abgerufen werden kann.

7. Gerät nach Anspruch 6, wobei das zweite digital codierte Datenelement Daten darstellt, die eine Charakteristik von einem von einem Mikrofon des Geräts und dem akustischen Treiber betreffen, wobei die Charakteristik eine aus einem Satz ist, der besteht aus: einem gemessenen realisierbaren Frequenzbereich, einem gemessenen Widerstand über einem spezifischen Frequenzbereich, einem gemessenen Ansprechpegel über einen spezifischen Frequenzbereich, einer Seriennummer, die es ermöglicht, eine gemessene Charakteristik von einem von einem Mikrofon des Geräts und dem akustischen Treiber aus einem Datensatz zu erzielen, einer Kennung eines Herstellers von einem von einem Mikrofon des Geräts und dem akustischen Treiber, die es ermöglicht, den Hersteller zu kontaktieren, um eine gemessene Charakteristik von einem von einem Mikrofon des Geräts und dem akustischen Treiber zu erzielen, einer Reparaturvorgeschichte, einer Aufarbeitungsvorgeschichte und einem Hinweis bezüglich eines mutmaßlichen Fehlerzustands.

8. Gerät nach Anspruch 1, ferner umfassend einen dritten Audiosignalleiter, der mit der Trennschaltung gekoppelt ist, wobei die Trennschaltung ferner strukturiert ist, um ein anderes Analogsignal, das einen Testton darstellt und durch die Vorrichtung auf dem dritten Audiosignalleiter und einem der beiden Audiosignalleiter bereitgestellt wird, über die Trennschaltung gehen zu lassen, während die Trennschaltung den MOSFET weiter betätigt, um ein Mikrofon des Geräts zu umgehen, um einen Test des akustischen Treibers zu ermöglichen.

9. Gerät nach Anspruch 8, wobei:
- das Gerät eine aktive Rauschunterdrückung bereitstellt;
- die Audioschaltung einen Kompensator umfasst;
- die Audioschaltung strukturiert ist, um Nebengeräuschunterdrückungstöne als abgeleiteten Ton abzuleiten; und
- der Test des akustischen Treibers eine Betätigung des akustischen Treibers mit dem Kompensator testet.

10. Gerät nach Anspruch 1, ferner umfassend eine Speichervorrichtung, die eine Vielzahl von Speicherplätzen aufweist, die in der Lage sind, ein erstes digital codiertes Datenelement zu speichern, und in der Lage sind, das erste digital codierte Datenelement als Reaktion darauf bereitzustellen, dass die Vorrichtung über die beiden Audiosignalleiter darauf zugreift, um das erste digital codierte Datenelement abzurufen, wobei:
- das erste digital codierte Datenelement eine Charakteristik von einem von einem Mikrofon des Geräts und dem akustischen Treiber betrifft; und
- die Trennschaltung ferner strukturiert ist, um mindestens die beiden Audiosignalleiter als einen digitalen seriellen Bus zu betätigen, um zu ermöglichen, dass das erste digital codierte Datenelement zwischen der Verstärkungsregelungskomponente und der Vorrichtung über die Trennschaltung und die beiden Audiosignalleiter als Reaktion auf die erste relativ hohe DC-Vorspannung über die beiden Audiosignalleiter ausgetauscht wird, damit das erste digital codierte Datenelement durch die Vorrichtung abgerufen werden kann.

11. Gerät nach Anspruch 10, wobei das erste digital codierte Datenelement Daten darstellt, die eine Charakteristik des Mikrofons betreffen, wobei die Charakteristik eine von einem Satz ist, der besteht aus: einem gemessenen realisierbaren Frequenzbereich, einem gemessenen Widerstand über einem spezifischen Frequenzbereich, einem gemessenen Ansprechpegel über einen spezifischen Frequenzbereich, einer Seriennummer, die es ermöglicht eine gemessene Charakteristik des Mikrofons aus einem Datensatz zu erzielen, einer Kennung eines Herstellers des Mikrofons, die es ermöglicht, den Hersteller zu kontaktieren, um eine gemessene Charakteristik des Mikrofons zu erzielen, einer Reparaturvorgeschichte, einer Aufarbeitungsvorgeschichte und einem Hinweis bezüglich eines mutmaßlichen Fehlerzustands.

12. Gerät nach Anspruch 1, wobei die Trennschaltung eine Zenerdiode umfasst, die eine Schwellenspannung aufweist, welche die erste Schwellenspannung definiert, die von der Trennschaltung verwendet wird, um zwischen der relativ niedrigen und der ersten relativen hohen DC-Vorspannung zu unterscheiden.

13. Verfahren, umfassend das Anlegen einer Spannung über zwei Audiosignalleiter eines Geräts, um zu bewirken, dass das Gerät nicht mehr in einem Audiomodus funktioniert, in dem man ein analoges Audiosignal, das über zwei Audiosignalleiter des Geräts von einer Vorrichtung, die mit den beiden Audiosignalleitern gekoppelt ist, weitergeleitet wird, über eine Trennschaltung des Geräts gehen lässt, um von einem akustischen Treiber des Geräts akustisch ausgegeben zu werden,
**dadurch gekennzeichnet, dass** die Spannung eine relativ hohe DC-Vorspannung ist.

14. Verfahren nach Anspruch 13, ferner umfassend das Auswählen der beiden Audiosignalleiter aus einer Vielzahl von mindestens drei oder mehreren Audiosignalleitern des Geräts, um zu bewirken, dass die Trennschaltung ein Gatter eines MOSFET des Geräts betätigt, um ein Mikrofon des Geräts zu umgehen, um zu verhindern, dass das Mikrofon ein anderes analoges Audiosignal, das Töne darstellt, die von dem Mikrofon erkannt werden, einer Audioschaltung des Geräts bereitstellt, damit sie von dem akustischen Treiber akustisch ausgegeben werden.

15. Verfahren nach Anspruch 13, ferner umfassend das Betätigen der beiden Audiosignalleiter als einen digitalen seriellen Bus, um ein erstes digital codiertes Datenelement über die beiden Audiosignalleiter und über die Trennschaltung in eine Verstärkungsregelungskomponente des Geräts zu schreiben, um eine Verstärkungseinstellung der Verstärkungsregelungskomponente einzustellen.

## Revendications

1. Appareil comprenant :
un pilote acoustique (1000) ;
deux conducteurs de signaux audio (191, 192) destinés à permettre le couplage de l'appareil à un dispositif ;
un circuit audio structuré pour manipuler un signal audio analogique représentant un son fourni par le dispositif sur les deux conducteurs de signaux audio afin de dériver un son dérivé à partir du son, et couplé au pilote acoustique pour transmettre un signal audio analogique dérivé représentant le son dérivé au pilote acoustique ;
**caractérisé en ce qu'**il comporte
un circuit de séparation (500) couplé aux deux conducteurs de signaux audio et au circuit audio, et structuré pour :
employer une première tension seuil pour établir une distinction entre une tension de polarisation CC relativement basse placée aux bornes des deux conducteurs de signaux audio par le dispositif et une première tension de polarisation CC relativement élevée placée aux bornes des deux conducteurs de signaux audio par le dispositif ;
en réponse à la tension de polarisation CC relativement basse placée aux bornes des deux conducteurs de signaux audio, permettre que le signal audio analogique soit transmis au travers du circuit de séparation des deux conducteurs de signaux audio au circuit audio ; et
en réponse à la première tension de polarisation CC relativement élevée aux bornes des deux conducteurs de signaux audio, cesser de permettre qu'un signal analogique émis sur l'un des deux conducteurs de signaux audio soit transmis au travers du circuit de séparation au circuit audio.

2. Appareil selon la revendication 1, comprenant en outre :
un microphone couplé au circuit audio ; et
un MOSFET couplé au microphone pour permettre que le MOSFET soit utilisé pour contourner le microphone, et ayant une grille couplée au circuit de séparation, dans lequel le circuit de séparation est structuré en outre pour utiliser la grille du MOSFET afin d'amener le MOSFET à contourner le microphone en réponse à la première tension de polarisation CC relativement élevée aux bornes des deux conducteurs de signaux audio.

3. Appareil selon la revendication 1, comprenant en outre un composant de contrôle de gain utilisable pour contrôler le gain du circuit audio pour compenser une caractéristique du pilote acoustique en réponse à l'accès et au réglage avec une première donnée codée numériquement au travers des deux conducteurs de signaux audio par le dispositif, dans lequel :
la première donnée codée numériquement représente la valeur du composant de contrôle de gain ; et
le circuit de séparation est structuré en outre pour utiliser au moins les deux conducteurs de signaux audio en tant que bus série numérique pour permettre que la première donnée codée numériquement soit échangée entre le composant de contrôle de gain et le dispositif au travers du circuit de séparation et des deux conducteurs de signaux audio en réponse à la première tension de polarisation CC relativement élevée aux bornes des deux conducteurs de signaux audio afin de permettre que le composant de contrôle de gain soit réglé sur la valeur.

4. Appareil selon la revendication 3, dans lequel le composant de contrôle de gain est un potentiomètre numérique, et la première donnée codée numériquement représente une valeur de résistance.

5. Appareil selon la revendication 3, dans lequel le composant de contrôle de gain est un amplificateur, et la première donnée codée numériquement représente une valeur de gain.

6. Appareil selon la revendication 5, dans lequel :
le composant de contrôle de gain comprend une pluralité d'emplacements de stockage aptes à stocker une deuxième donnée codée numériquement concernant une caractéristique soit d'un microphone de l'appareil, soit du pilote acoustique ; et
le circuit de séparation est structuré en outre pour utiliser au moins les deux conducteurs de signaux audio en tant que bus série numérique pour permettre que la deuxième donnée codée numériquement soit échangée entre le composant de contrôle de gain et le dispositif au travers du circuit de séparation et des deux conducteurs de signaux audio en réponse à la première tension de polarisation CC relativement élevée aux bornes des deux conducteurs de signaux audio afin de permettre que la deuxième donnée codée numériquement soit récupérée de l'un de la pluralité d'emplacements de stockage.

7. Appareil selon la revendication 6, dans lequel la deuxième donnée codée numériquement représente des données concernant une caractéristique soit d'un microphone de l'appareil, soit du pilote acoustique, la caractéristique étant l'une d'un ensemble consistant en : une plage de fréquences réalisables mesurée, une résistance mesurée sur une plage spécifique de fréquences, une niveau de sensibilité mesuré sur une plage spécifique de fréquences, un numéro de série permettant qu'une caractéristique mesurée soit d'un microphone de l'appareil, soit du pilote acoustique soit obtenue à partir d'un enregistrement, l'identité du fabricant soit d'un microphone de l'appareil, soit du pilote acoustique permettant de contacter le fabricant afin d'obtenir une caractéristique mesurée soit d'un microphone de l'appareil, soit du pilote acoustique, un historique des réparations, un historique des remises en état, et une note concernant un mode de défaillance suspecté.

8. Appareil selon la revendication 1, comprenant en outre un troisième conducteur de signaux audio couplé au circuit de séparation, dans lequel le circuit de séparation est structuré en outre pour permettre qu'un autre signal analogique représentant un son de test et fourni par le dispositif sur le troisième conducteur de signaux audio et l'un des deux conducteurs de signaux audio passe au travers du circuit de séparation pendant que le circuit de séparation continue d'utiliser le MOSFET pour contourner un microphone de l'appareil afin de permettre le test du pilote acoustique.

9. Appareil selon la revendication 8, dans lequel :
l'appareil fournit une réduction active du bruit ;
le circuit audio comprend un compensateur de réduction active du bruit ;
le circuit audio est structuré pour dériver des sons anti-bruit en tant que son dérivé ; et
le test du pilote acoustique teste le fonctionnement du pilote acoustique avec le compensateur de réduction active du bruit.

10. Appareil selon la revendication 1, comprenant en outre une mémoire dotée d'une pluralité d'emplacements de stockage apte à stocker une première donnée codée numériquement et apte à fournir la première donnée codée numériquement en réponse à l'accès pour récupérer la première donnée codée numériquement au travers des deux conducteurs de signaux audio par le dispositif, dans lequel :
la première donnée codée numériquement concerne une caractéristique soit d'un microphone de l'appareil, soit du pilote acoustique ; et
le circuit de séparation est structuré en outre pour utiliser au moins les deux conducteurs de signaux audio en tant que bus série numérique pour permettre que la première donnée codée numériquement soit échangée entre le composant de contrôle de gain et le dispositif au travers du circuit de séparation et des deux conducteurs de signaux audio en réponse à la première tension de polarisation CC relativement élevée aux bornes des deux conducteurs de signaux audio afin de permettre que la première donnée codée numériquement soit récupérée par le dispositif.

11. Appareil selon la revendication 10, dans lequel la première donnée codée numériquement représente des données concernant une caractéristique du microphone, la caractéristique étant l'une d'un ensemble consistant en : une plage de fréquences réalisables mesurée, une résistance mesurée sur une plage spécifique de fréquences, un niveau de sensibilité mesuré sur une plage spécifique de fréquences, un numéro de série permettant qu'une caractéristique mesurée du microphone soit obtenue à partir d'un enregistrement, l'identité du fabricant du microphone permettant de contacter le fabricant afin d'obtenir une caractéristique mesurée du microphone, un historique des réparations, un historique des remises en état, et une note concernant un mode de défaillance suspecté.

12. Appareil selon la revendication 1, dans lequel le circuit de séparation comprend une diode Zener ayant une fréquence seuil qui définit la première tension seuil employée par le circuit de séparation pour établir une distinction entre la tension de polarisation CC relativement basse et la première tension de polarisation CC relativement élevée.

13. Procédé comprenant l'application d'une tension de polarisation CC relativement élevée aux bornes de deux conducteurs de signaux audio d'un appareil pour amener l'appareil à cesser de fonctionner dans un mode audio dans lequel un signal audio analogique transmis au travers de deux conducteurs de signaux audio de l'appareil par un dispositif couplé aux deux conducteurs de signaux audio est autorisé à passer à travers un circuit de séparation de l'appareil pour être émis acoustiquement par un pilote acoustique de l'appareil, **caractérisé en ce que** la tension est une tension de polarisation CC relativement élevée.

14. Procédé selon la revendication 13, comprenant en outre la sélection des deux conducteurs de signaux audio parmi une pluralité d'au moins trois conducteurs de signaux audio ou plus de l'appareil pour amener le circuit de séparation à utiliser une grille d'un MOSFET de l'appareil pour contourner un microphone de l'appareil afin d'empêcher que le microphone ne fournisse un autre signal audio analogique représentant des sons détectés par le microphone à un circuit audio de l'appareil afin qu'il soit émis acoustiquement par le pilote acoustique.

15. Procédé selon la revendication 13, comprenant en outre l'utilisation des deux conducteurs de signaux audio en tant que bus série numérique pour écrire une première donnée codée numériquement au travers des deux conducteurs de signaux audio et au travers du circuit de séparation dans un composant de contrôle de gain de l'appareil afin de régler la valeur de gain du composant de contrôle de gain.
